# EUROPEAN PATENT APPLICATION

(11) **EP 1 306 750 A2**
(43) Date of publication of application: **02.05.2003**
(21) Application number: 02255073.5
(22) Date of filing: 19.07.2002
(51) Int. Cl.: G06F 7/72

(54) **Multi-scalar multiplication computation in elliptic curve signature verification**

(30) Priority: 26.10.2001 JP 2001328512
(71) Applicant: Hitachi, Ltd., Chiyoda-ku, Tokyo (JP)
(72) Inventor: Okeya, Katsuyuki, c/oHitachi Ltd., Chiyoda-ku, Tokyo 100-8220 (JP)
(74) Representative: Calderbank, Thomas Roger

(57) **Abstract**

In the computation of a multi-scalar multiplication kP + 1Q that becomes necessary when performing the signature verification by the elliptic curve digital signature algorithm (ECDSA), there is provided a simultaneous method that implements a signed computation method as well as a speeding-up of the precomputation. Concretely, in a multi-scalar multiplication computation method for computing a multi-scalar multiplied point from a plurality of scalar values and a plurality of points positioned on an elliptic curve, when computing a predetermined number of points on the elliptic curve in the precomputation, there occur plural inversions. At this time, these plurality of inversions are computed by once inversion and plural multiplications. Moreover, the scalar values are represented as signed sequences, i.e., sequences of 0, 1, and -1. Finally, using these sequences, the multi-scalar multiplication is computed by a simultaneous method.

## Description

The present invention relates to security techniques in a computer network. More specifically, it relates to a method, an apparatus, and a program for executing signature verification in an elliptic curve cryptosystem.

The elliptic curve cryptosystem is one type of public key cryptosystem proposed by N. Koblitz and V. S. Miller. The public key cryptosystem includes information called "a public key" that may be open to the general public, and secret information called "a private key" that must be kept confidential. The public key is used for the encryption of a given message and the verification of the signature. Meanwhile, the private key is used for the decryption of the encrypted given message and the generation of the signature. A scalar value plays a role of the private key in the elliptic curve cryptosystem. Also, the security of the elliptic curve cryptosystem originates from the difficulty in determining the solution of the elliptic-curve discrete logarithm problem. Here, the elliptic-curve discrete logarithm problem is as follows: When a certain point P on an elliptic curve and a point dP, which is a scalar multiplication of the point P, are given, the scalar value d is determined. Also, here, the point on the elliptic curve refers to a set of numbers that satisfy the defining equation of the elliptic curve. With respect to all the points on the elliptic curve, an operation is defined where a virtual point, i.e., the point at infinity, is selected as the identity element. This operation is, namely, an addition (or *an additive operation*) on the elliptic curve. Moreover, the addition of the same points on the elliptic curve, in particular, is referred to as "a doubling". The addition of two points on the elliptic curve is calculated as follows: When drawing a line that passes through the two points, the line intersects the elliptic curve at a point other than the two points. Then, a point that is symmetric to this point of intersection with reference to the x-axis is defined as the point resulting from the execution of the addition. Also, the doubling of a point on the elliptic curve is calculated as follows: When drawing a tangent line at the point on the elliptic curve, the tangent line intersects the elliptic curve at another point. Then, a point that is symmetric to this point of intersection with reference to the x-axis is defined as the point resulting from the execution of the doubling. Executing the additions toward a certain point at a specified number of times, the result obtained, and this number of times are referred to as "the scalar multiplication", "a scalar multiplied point", and "the scalar value", respectively.

With the developments of information communicating networks, the cryptographic technologies have been becoming elements that are absolutely necessary for the confidentiality and the authentication of electronic information. In the networks, the speeding-up as well as the security of the cryptographic technologies are now desired. Since the elliptic-curve discrete logarithm problem is extremely difficult, the elliptic curve cryptosystem permits the key length to be relatively shortened in comparison with the RSA cryptosystem where the security is based on the difficulty in the integer factorization. This allows the implementation of a relatively high-speed cryptographic processing. Even this processing, however, is not necessarily fast enough to be able to be satisfied in a smart card whose processing capability is limited, a server required to perform a large quantity of cryptographic processing, or the like. This situation requires the implementation of an even further speeding-up of the cryptosystem.

As an elliptic curve signature verification method, the ECDSA has been described in ANSI X9.62, "Public Key Cryptography for the Financial Services Industry: The Elliptic Curve Digital Signature Algorithm (ECDSA)", (1999). The computation that necessitates the longest time in the signature verification by the ECDSA is the computation of a multi-scalar multiplication kP + lQ. Here, the point P has been given beforehand, and the point Q is given immediately before the computation is performed. The reference notations k and l denote scalar values, respectively. As methods for executing the computation of kP + lQ at a high-speed, the method where the comb method and the window method are in combined-use, and the simultaneous method have been described in D. Hankerson, J. L. Hernandez, A. Menezes, "Software Implementation of Elliptic Curve Cryptography Over Binary Fields", Cryptographic Hardware and Embedded Systems-CHES 2000, LNCS 1965, Springer-Verlag, (2000) pp. 1-24. This research paper has stated that the method where the comb method and the window method are in combined-use allows the implementation of the highest-speed computation.

According to the above-described prior art, when performing the signature verification by the ECDSA, the use of the method where the comb method and the window method are in combined-use implements the higher-speed computation than the use of the simultaneous method does. The reasons for this are as follows: The simultaneous method necessitates a large quantity of precomputation and, in this precomputation, there occur a large number of inversions that necessitate a comparatively long time. Also, there has been not known a method by which, like the scalar multiplication computation, the scalar values are represented and computed in a signed manner.

In the computation of the multi-scalar multiplication kP + lQ that becomes necessary when performing the signature verification by the ECDSA, it is desirable for the present invention to provide a simultaneous method that implements a signed computation method as well as a speeding-up of the precomputation.

According to one aspect of the present invention, in an elliptic curve in an elliptic curve signature verification method, a multi-scalar multiplication computation method for computing a multi-scalar multiplied point from a plurality of scalar values and a plurality of points on the elliptic curve includes the following steps: Representing said scalar values as sequences of 0, 1, and -1, computing, by a 1-time inversion, predetermined number of points on the elliptic curve from said points on the elliptic curve, and computing the multi-scalar multiplied point from said scalar values, said points on the elliptic curve, and said computed points on the elliptic curve.

According to another aspect of the present invention, in an elliptic curve in an elliptic curve signature verification method, a multi-scalar multiplication computation method for computing a multi-scalar multiplied point from a plurality of scalar values and a plurality of points on the elliptic curve has the following steps: Computing, by a 1-time inversion, predetermined number of points on the elliptic curve from said points on the elliptic curve, and computing the multi-scalar multiplied point from said scalar values, said points on the elliptic curve, and said computed points on the elliptic curve.

According to still another aspect of the present invention, in an elliptic curve in an elliptic curve signature verification method, a multi-scalar multiplication computation method for computing a multi-scalar multiplied point from a plurality of scalar values and a plurality of points on the elliptic curve has the following steps: Representing said scalar values as sequences of 0, 1, and -1, computing predetermined number of points on the elliptic curve from said points on the elliptic curve, and computing the multi-scalar multiplied point from said scalar values, said points on the elliptic curve, and said computed points on the elliptic curve.

Other preferred objects, features and advantages of the invention will become apparent from the following description of the embodiments of the invention taken in conjunction with the accompanying drawings.
In The Drawings
FIG. 1 is a configuration block diagram of an elliptic curve signature verification apparatus according to an embodiment of the present invention;
FIG. 2 is a flowchart for illustrating a signature verification method in the elliptic curve signature verification apparatus in FIG. 1;
FIG. 3 is a sequence diagram for illustrating a processing flow in the elliptic curve signature verification apparatus in FIG. 1;
FIG. 4 is a flowchart for illustrating a multi-scalar multiplication computation method in an elliptic curve signature verification apparatus according to a 1st embodiment of the present invention;
FIG. 5 is a flowchart for illustrating a multi-scalar multiplication computation method in an elliptic curve signature verification apparatus according to a 2nd embodiment of the present invention;
FIG. 6 is a flowchart for illustrating a multi-scalar multiplication computation method in an elliptic curve signature verification apparatus according to a 3rd embodiment of the present invention;
FIG. 7 is a flowchart for illustrating a multi-scalar multiplication computation method in an elliptic curve signature verification apparatus according to a 4th embodiment of the present invention;
FIG. 8 is a flowchart for illustrating a multi-scalar multiplication computation method in an elliptic curve signature verification apparatus according to a 5th embodiment of the present invention;
FIG. 9 is a flowchart for illustrating a multi-scalar multiplication computation method in an elliptic curve signature verification apparatus according to a 6th embodiment of the present invention;
FIG. 10, which is integrated with FIG. 9, is a flowchart for illustrating the multi-scalar multiplication computation method in the elliptic curve signature verification apparatus according to the 6th embodiment of the present invention;
FIG. 11 is a configuration diagram of a multi-scalar multiplication computation apparatus according to the embodiment of the present invention;
FIG. 12 is a flowchart for illustrating a multi-scalar multiplication computation method in the multi-scalar multiplication computation apparatus in FIG. 11;
FIG. 13 is a flowchart for illustrating a multi-scalar multiplication computation method in an elliptic curve signature verification apparatus according to a 7th embodiment of the present invention; and
FIG. 14, which is integrated with FIG. 13, is a flowchart for illustrating the multi-scalar multiplication computation method in the elliptic curve signature verification apparatus according to the 7th embodiment of the present invention.

Hereinafter, referring to the accompanying drawings, the explanation will be given below concerning the embodiments of the present invention.

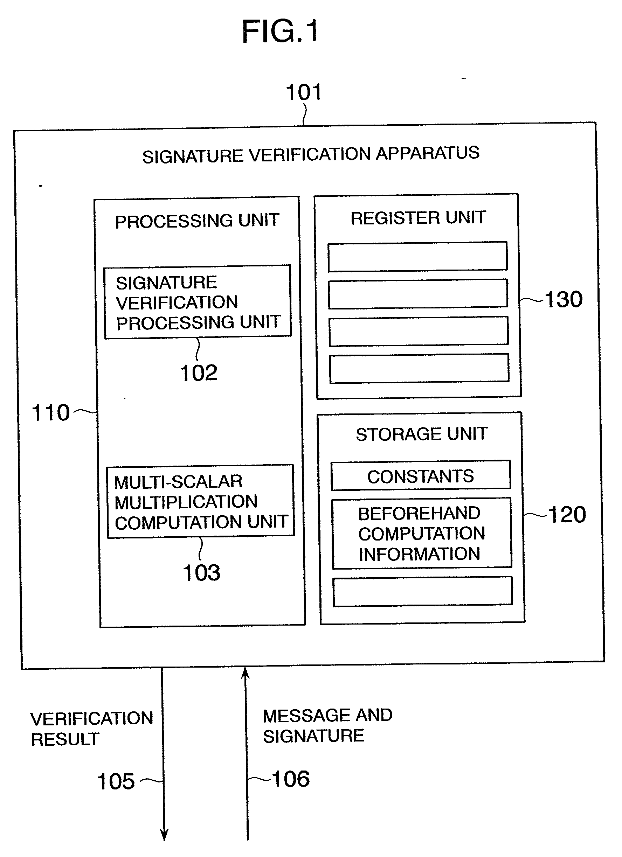

FIG. 1 illustrates the configuration of an elliptic curve signature verification apparatus. This signature verification apparatus 101 performs the verification of an inputted signature.

When verifying an inputted signature by the ECDSA, it is satisfactory enough to confirm whether or not the following condition will hold: "Assuming that k = fd⁻¹ (mod r), l = cd⁻¹ (mod r), and R = kP + lQ, the x-coordinate of R and c are congruent modulo r." Here, the reference notations denote the following, respectively: f a numerical value corresponding to a message, (c, d) a set of integers indicating the signature, Q a point on an elliptic curve indicating a public key, P a base point given beforehand, r the order of the base point P, k, l scalar values.

The signature verification apparatus 101 illustrated in FIG. 1 includes a processing unit 110, a storage unit 120, and a register unit 130. The processing unit 110 indicates, by function blocks, processings necessary for the signature verification. Namely, the unit 110 includes a signature verification processing unit 102 for performing the verification of the inputted signature, and a multi-scalar multiplication computation unit 103 for computing parameters that the signature verification processing unit 102 needs in order to perform the verification of the signature. The storage unit 120 has stored constants, beforehand *(in-advance)* computation information, and the like. The register unit 130 temporarily stores the result of the computation in the signature verification processings, and the information stored in the storage unit 120. Incidentally, the processing unit 110 and the register unit 130 can be implemented using a specifically-designed computation apparatus, CPU, or the like for performing the processing explained below. Also, the storage unit 120 can be implemented using a RAM, a ROM, or the like.

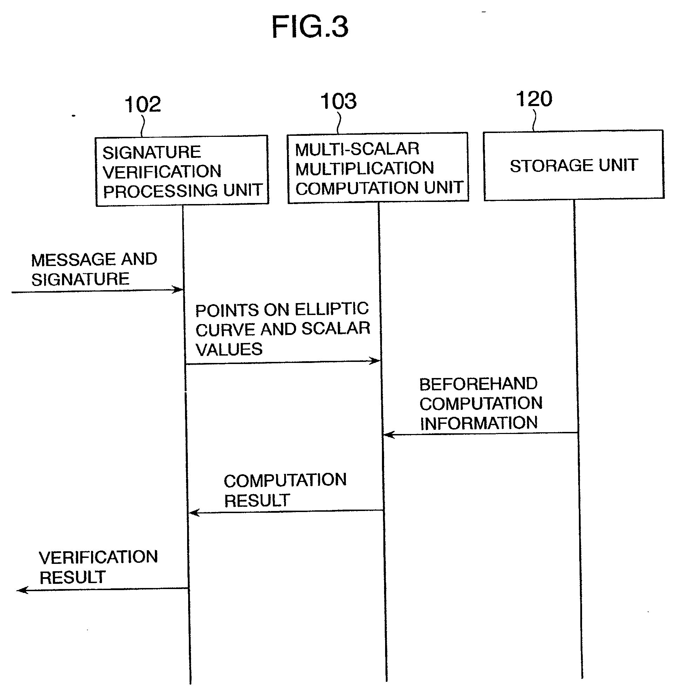

Next, the explanation will be given below concerning the operation of the signature verification apparatus 101 illustrated in FIG. 1. FIG. 3 illustrates the information transmission among the respective units 102, 103, and 120 in the case where the signature verification is performed in the signature verification apparatus 101.

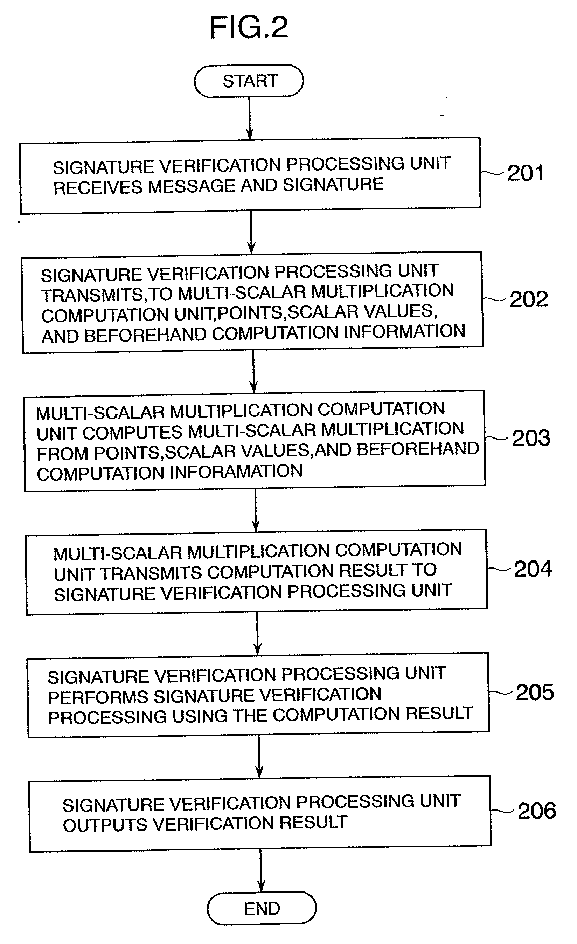

At first, referring to FIG. 2, the explanation will be given below regarding the operation in the case of verifying the inputted signature.

When a message and a signature are inputted into the signature verification processing unit 102 (S201), it is judged whether or not the message and the signature inputted will fall within a predetermined range (f > = 0; 1 < = c, d < r). If the signature falls outside the range, the signature is outputted as being an invalid signature. Next, the signature verification processing unit 102 computes the scalar values k = fd⁻¹ (mod r) and l = cd⁻¹ (mod r) from the message f and the signature (c, d). Moreover, the signature verification processing unit 102 transmits, to the multi-scalar multiplication computation unit 103, the base point P, the public key Q, the scalar values k, l, and 2P, 3P, ··· as the beforehand computation information (S202). In addition, the multi-scalar multiplication computation unit 103 computes the multi-scalar multiplied point kP + lQ from the base point P, the public key Q, the scalar values k, l, and the beforehand computation information (S203), then transmitting the computed multi-scalar multiplied point back to the signature verification processing unit 102 (S204). Furthermore, the signature verification processing unit 102 checks whether or not the x-coordinate of the transmitted multi-scalar multiplied point kP + lQ and c of the signature (c, d) are congruent modulo r (S205). Finally, the signature verification apparatus 101 outputs the verification result obtained by the signature verification processing unit 102 (S206). In accordance with the above-described manner, the signature verification processing unit 102 performs the signature verification processing.

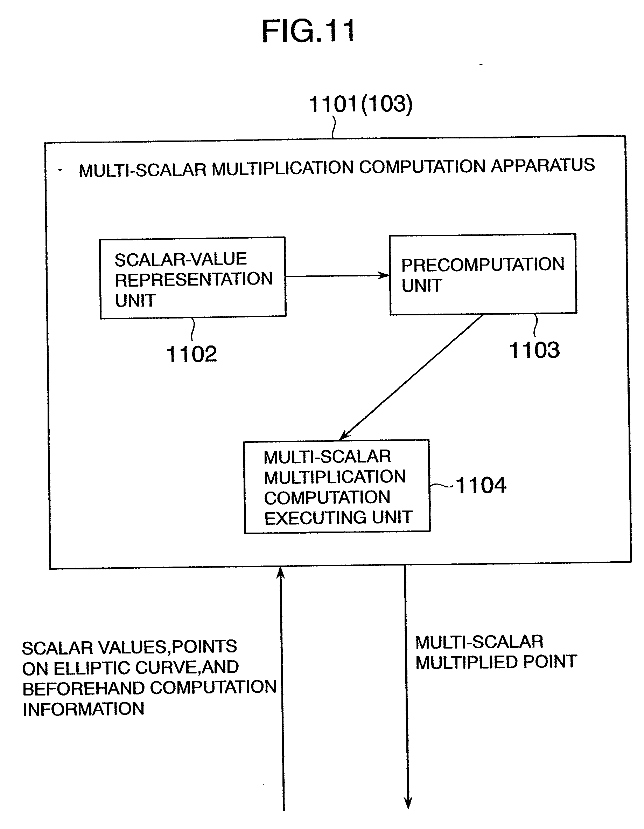

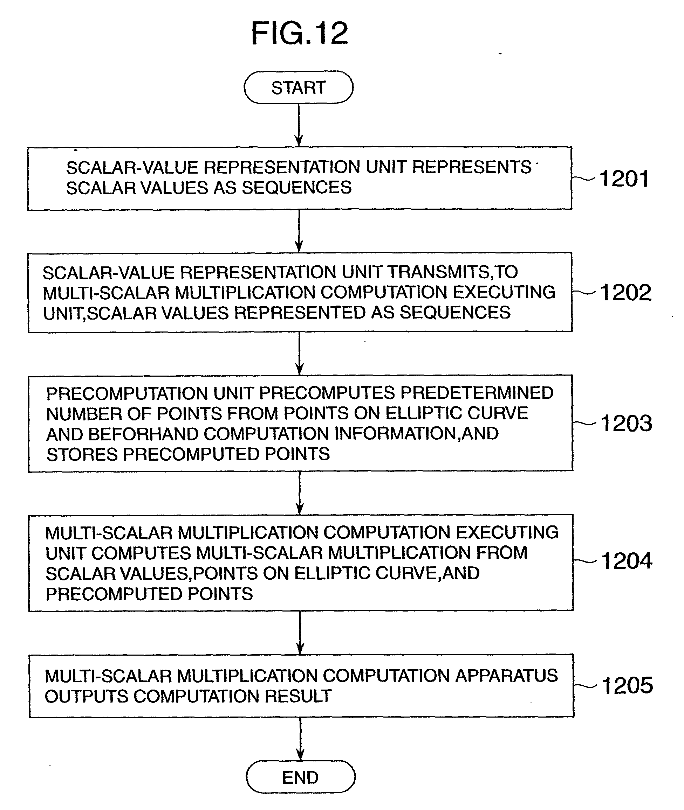

Next, referring to FIGS. 11 and 12, the explanation will be given below regarding the processing by the multi-scalar multiplication computation unit 103 included in the signature verification apparatus 101.

FIG. 11 illustrates a multi-scalar multiplication computation apparatus 1101 having function blocks of the multi-scalar multiplication computation unit 103. FIG. 12 is a flow diagram for illustrating the operation of the multi-scalar multiplication computation apparatus 1101.

When the scalar values, the points on the elliptic curve, and the beforehand computation information are inputted into the multi-scalar multiplication computation apparatus 1101, a scalar-value representation unit 1102 represents the inputted scalar values as sequences of 0, 1, and the like (S1201). Moreover, the scalar-value representation unit 1102 transmits, to a multi-scalar multiplication computation executing unit 1104, the scalar values represented as the sequences (S1202). Meanwhile, a precomputation unit 1103 precomputes predetermined number of points from the points on the elliptic curve and the beforehand computation information, then storing the precomputed points (S1203). Furthermore, the multi-scalar multiplication computation executing unit 1104 computes the multi-scalar multiplication from the following (S1204): The scalar values that the scalar-value representation unit 1102 has represented as the sequences, the points on the elliptic curve inputted into the multi-scalar multiplication computation apparatus 1101, and the precomputed points that the precomputation unit 1103 has precomputed. Finally, the multi-scalar multiplication computation apparatus 1101 outputs, as the computation result, the multi-scalar multiplication that the multi-scalar multiplication computation executing unit 1104 has computed (S1205). In accordance with the above-described manner, the multi-scalar multiplication computation apparatus 1101 computes the multi-scalar multiplication.

Hereinafter, with respect to the multi-scalar multiplication computation unit 103, several concrete embodiments concerning the above-described processing will be explained.

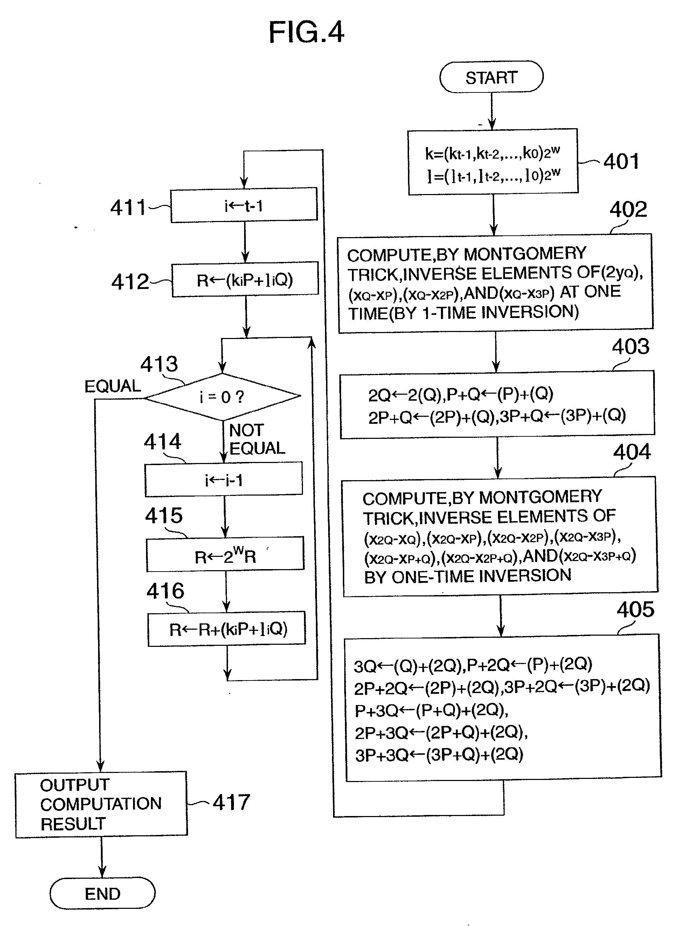

A 1st embodiment is as follows: The multi-scalar multiplication computation unit 103 computes and outputs a point kP + lQ on an elliptic curve from scalar values k, l, a fixed point P and a point Q on the elliptic curve, and beforehand computation information 2P, 3P, ···, (2^{w}-1)P. Thus, referring to FIG. 4, the explanation will be given below concerning the processing by the multi-scalar multiplication computation unit 103 that outputs kP + lQ when the scalar values k, l and the fixed point P and the point Q on the elliptic curve are given.

The multi-scalar multiplication computation unit 103 inputs the scalar values k, 1, the fixed point P and the point Q on the elliptic curve, and the beforehand computation information 2P, 3P, ··, (2^{w}-1)P, then computing and outputting the point kP + lQ in accordance with the following steps:

At a step 401, the scalar values k, l are transformed into the 2^{w}-adic representation: k = (kₜ₋₁, kₜ₋₂, ···, k₀)₂^{w}, l = (lₜ₋₁, lₜ₋₂, ···, l₀)₂^{w}. Namely, the scalar values k, l are represented as k = kₜ₋₁2^{w(t-1)} + kₜ₋₂2^{w(t-2)} + ... + k₀, l = lₜ₋₁2^{w(t-1)} + -lₜ₋₂2^{w(t-2)} + ··· + l₀, 0 <= kᵢ < 2^{w}, 0 <= lᵢ < 2^{w}. Hereinafter, in the 1st embodiment, assume that w = 2 for simplicity of the explanation. At steps 402 to 405, a precomputation table is created. Namely, points of iP + jQ (i = 0, 1, 2, 3,j = 0, 1, 2, 3) are precomputed, then being stored into the precomputation table. At the step 402, inverse elements of (2y_{Q}), (x_{Q}-x_{P}), (x_{Q}-x_{2P}), and (x_{Q}-x_{3P}), which become necessary for computing 2(Q), (P) + (Q), (2P) + (Q), and (3P) + (Q), are computed. Here, y_{Q}, x_{Q}, x_{P}, x_{2P}, and x_{3P} denote the y-coordinate of the point Q, the x-coordinate of the point Q, the x-coordinate of the point P, the x-coordinate of the point 2P, and the x-coordinate of the point 3P, respectively. Also, here, an addition and a doubling in the affine coordinates of points on an elliptic curve are given by the following expressions, respectively:
the addition (x₃, y₃) = (x₁,y₁) + (x₂,y₂) : x₃= ((y₂-y₁)/(x₂-x₁))²-x₁-x₂, y₃=y₁+((y₂-y₁)/(x₂-x₁)) (x₁-x₃).
the doubling (x_{3,} y₃) =2 (x₁, y₁) : x₃= ((3x₁²+a)/(2y₁))²-2x₁, y₃=-y₁+((3x₁²+a)/(2y₁)) (x₁-x₃).
Here, the notation a denotes the parameter a of an elliptic curve y² = x³ + ax + b. Consequently, the addition and the doubling requires a 1-time inversion (i.e., 1/(x₂-x₁) or l/(2y₁)) each. The utilization of the Montgomery trick for the computation of the inverse elements of (2y_{Q}), (x_{Q}-x_{P}), (x_{Q}-x_{2P}), and (x_{Q}-x_{3P}) makes it possible to accomplish the computation of the inverse elements by a 1-time inversion and 9-times multiplications. The Montgomery trick has been described in H. Cohen, "A Course in Computational Algebraic Number Theory", GTM138, Springer-Verlag, (1993). The Montgomery trick is a method where, when a₁, a₂, ···, aₙ are given, the inverse elements b₁, b₂, ···, bₙ of a₁, a₂, ···, aₙ are computed by the following algorithm:
1. c₁ ← a₁
2. for i = 2 to n do
   2.1cᵢ ← cᵢ₋₁aᵢ
   2.2u ← (cₙ)⁻¹
3. for i = n down to 2 do
   3.1bᵢ ← cᵢ₋₁u
   3.2u ← uaᵢ
4. b₁ ← u

Although, in the ordinary cases, n-times inversions are required to accomplish the computation of the inverse elements, this algorithm makes it possible to accomplish the computation by 3(n-1)-times multiplications and a 1-time inversion. When applying this algorithm, assume that n = 4, a₁ = (2y_{Q}), a₂ = (x_{Q}-x_{P}), a₃ = (x_{Q}-x_{2P}), and a₄ = (x_{Q}-x_{3P}). This gives c₁ = (2y_{Q}), c₂ = c₁×(x_{Q}-x_{P}), c₃ = c₂×(x_{Q}-x_{2P}), and c₄ = c₃×(x_{Q}-x_{3P}). Moreover, u₄ (u₄ = 1/c₄), i.e., the inverse element of c₄, is determined. Furthermore, the following are determined in sequence: b₄ = c₃×u₄, u₃ = u₄×(x_{Q}-x_{3P}), b₃ = c₂×u₃, u₂ = u₃×(x_{Q}-x_{2P}), b₂ = c₁×u₂, u₁ = u₂×(x_{Q}-x_{P}), and b₁ = u₁. As a result, it turns out that b₁ = 1/(2y_{Q}), b₂ = *1*/*(x*_{*Q*}*-x*_{*P*}*)*, b₃ = 1/(x_{Q}-x_{2P}), and b₄ = 1/(x_{Q}-x_{3P}). This means that the inverse elements of (2y_{Q}), (x_{Q}-x_{P}), (x_{Q}-x_{2P}), and (x_{Q}-x_{3P}) have been determined. In this way, the utilization of the Montgomery trick allows the inverse elements to be determined by the 1-time inversion and the 9-times multiplications.

At the step 403, using 1/(2y_{Q}), 1/(x_{Q}-x_{P}), 1/(x_{Q}-x_{2P}), and 1/(x_{Q}-x_{3P}), i.e., the inverse elements computed at the step 402, 2(Q), (P) + (Q), (2P) + (Q), and (3P) + (Q) are computed each. Moreover, at the step 404, inverse elements of (x_{2Q}-x_{Q}), (x_{2Q}-x_{P}), (x_{2Q}-x_{2P}), (x_{2Q}-x_{3P}), (x_{2Q}-x_{P+Q}), (x_{2Q}-x_{2P+Q}), and (x_{2Q}-x_{3P+Q}), which become necessary for computing (Q) + (2Q), (P) + (2Q), (2P) + (2Q), (3P) + (2Q), (P + Q) + (2Q), (2P + Q) + (2Q), and (3P + Q) + (2Q), are computed. As explained earlier, the utilization of the Montgomery trick for the computation of the inverse elements makes it possible to accomplish the computation of the inverse elements by a 1-time inversion and 18-times multiplications. At the step 405, using 1/(x_{2Q}-x_{Q}), 1/(x_{2Q}-x_{P}), 1/ (x_{2Q}-x_{2P}), 1/(x_{2Q}-x_{3P}), 1/ (x_{2Q}-x_{P+Q}), 1/ (x_{2Q}-x_{2P+Q}), and 1/(x_{2Q}-x_{3P+Q}), i.e., the inverse elements computed at the step 404, (Q) + (2Q), (P) + (2Q), (2P) + (2Q), (3P) + (2Q), (P + Q) + (2Q), (2P + Q) + (2Q), and (3P + Q) + (2Q) are computed each. Up until this processing, the points iP + jQ to be stored into the precomputation table have been precomputed. Next, using the points stored in the precomputation table, the point kP + lQ is computed. At a step 411, an initial value t-1 is substituted into the variable i. At a step 412, the point (kᵢP + lᵢQ) stored in the register is substituted into R. At a step 413, it is judged whether or not the variable i is equal to 0. If the variable i is equal thereto, the processing goes to a step 417. If not, the processing goes to a step 414. At the step 414, the variable i is decremented by 1. At a step 415, R multiplied by 2^{w} is computed, then being substituted into R. At a step 416, (kᵢP + lᵢQ) stored in the register is added to R, then being substituted into R. At the step 417, R is outputted as the point kP + lQ.

From the scalar values k, l, the fixed point P and the point Q on the elliptic curve, and the beforehand computation information 2P, 3P, ···, (2^{w}-1)P provided to the multi-scalar multiplication computation unit 103, the point kP + lQ on the elliptic curve can be computed in accordance with the above-described steps. The reason for this is as follows: The step 412 gives R = kₜ₋₁P + l ₜ₋₁Q. After that, if, at the step 413, the variable i is judged to be not equal to 0, the step 414 leads to i = t-2. Moreover, the step 415 gives R = 2^{w} (kₜ₋₁P + l ₜ₋₁Q), and the step 416 leads to R = 2^{w} (kₜ₋₁P + l ₜ₋₁Q) + kₜ₋₂P + l ₜ₋₂Q. After that, going back to the step 413, the steps 414, 415, and 416 are repeated as long as i is not equal to 0. This repeated processing is finished at a point-in-time when i becomes equal to 0. As a result, R at that point-in-time becomes R = 2^{w} (··· 2^{w} (2^{w} (kₜ₋₁P + l ₜ₋₁Q) + kₜ₋₂P + l ₜ₋₂Q) + ···) + k₀P + l ₀Q. Arranging the right side results in (kₜ₋₁2^{w(t-1)} + kₜ₋₂2^{w(t-2)} + ··· + k₀)P + (lₜ₋₁2^{w(t-1)} + lₜ₋₂2^{w(t-2)} + ··· + l₀)Q. This means that R = kP + lQ.

The computational cost of an addition and that of a doubling in the affine coordinates of an elliptic curve become equal to 2M + S + I and 2M + 2S + I, respectively. Here, M, S, and I denote the computational cost of a multiplication on a finite field, that of a squaring on the finite field, and that of an inversion on the finite field, respectively. The Montgomery trick allows the 4-times inversions at the step 402 to be accomplished by 9M + I, and allows the 7-times inversions at the step 404 to be accomplished by 18M + I. Accordingly, the steps 402 and 403 necessitate the computational cost of 17M + 5S + I, and the steps 404 and 405 necessitate that of 32M + 7S + I. Moreover, at the step 416, if one of kᵢ and lᵢ is not equal to 0, the addition with (kᵢP + lᵢQ) occurs. Here, the Jacobian coordinates are employed as the coordinates before the computation, and the modified Jacobian coordinates are employed as the coordinates after the computation. This makes it possible to reduce the computational cost, and this cost becomes equal to 9M + 5S. Also, at this time, the computational cost of the w-times doublings is necessary at the step 415. Here, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost, and this cost becomes equal to (4w-1)M + 4wS, which, here, is equal to 7M + 8S since the condition w = 2 is assumed. Meanwhile, at the step 416, if both of kᵢ and lᵢ are equal to 0, none of the addition occurs at the step 416. The probability of this condition's occurrence is equal to 2^{-2w}. Also, at this time, the computational cost of the w-times doublings is necessary at the step 415. Here, with respect to all the doublings, the modified Jacobian coordinates are employed as both the before-computation coordinates and the after-computation coordinates. This makes it possible to reduce the computational cost, and this cost becomes equal to 4wM + 4wS, which, here, is equal to 8M + 8S since the condition w = 2 is assumed. Furthermore, since the repetition number of the steps 414, 415, and 416 becomes (t-1) times, the computational cost of this repeated part as a whole becomes (t-1)(248M + 203S)/16. Consequently, the entire computational cost becomes equal to ((t-1)(248M + 203S)/16) + 49M + 12S + 2I. In general, it can be estimated that the computational cost S is an order of S = 0.8M and the computational cost I is an order of I = 40M. Thus, assuming these estimates and in the case of, e.g., 160 bits, i.e., t = 80, the computational cost of the algorithm in the above-described steps becomes equal to approximately 2161.8M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased.

Trying to perform the precomputation at the steps 402 to 405 without utilizing the Montgomery trick necessitates 10-times additions and a 1-time doubling on the elliptic curve. The computational cost thereof becomes equal to 22M + 12S + 11I. Assuming that S = 0.8M and I = 40M, this computational cost is equal to 471.6M. Thus, in the case of 160 bits (i.e., t = 80), the entire computational cost becomes equal to approximately 2494.8M. Accordingly, the above-described computation algorithm implements the higher-speed computation. Meanwhile, in the method where the comb method and the window method are in combined-use, the computational cost in the case of 160 bits is equal to approximately 2337M. Consequently, the above-described computation algorithm also implements the higher-speed computation.

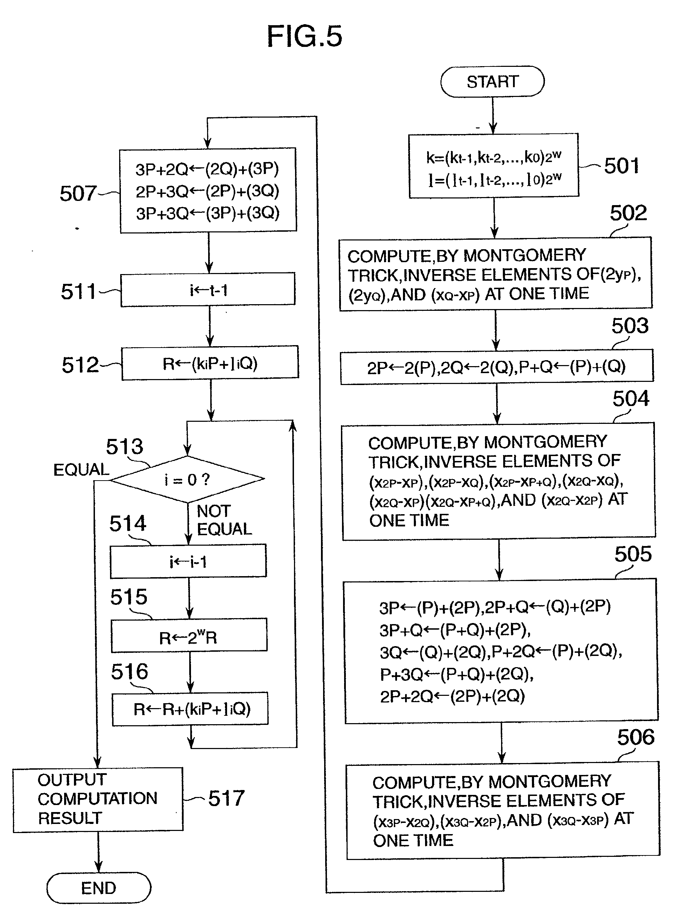

A 2nd embodiment is as follows: The multi-scalar multiplication computation unit 103 computes and outputs a point kP + lQ on an elliptic curve from scalar values k, l and a point P and a point Q on the elliptic curve. Thus, referring to FIG. 5, the explanation will be given below concerning the processing by the multi-scalar multiplication computation unit 103 that outputs kP + lQ when the scalar values k, l and the point P and the point Q on the elliptic curve are given.

The multi-scalar multiplication computation unit 103 inputs the scalar values k, l and the point P and the point Q on the elliptic curve, then computing and outputting the point kP + lQ in accordance with the following steps:

At a step 501, the scalar values k, l are transformed into the 2^{w}-adic representation: k = (kₜ₋₁, kₜ₋₂, ··· _{'} k₀)₂^{w}, l = (lₜ₋₁, lₜ₋₂, ··· , l₀)₂^{w}. Namely, the scalar values k, l are represented as k = kₜ₋₁2^{w(t-1)} + kₜ₋₂2^{w(t-2)} + ··· + k₀, l = lₜ₋₁2^{w(t-1)} + lₜ₋₂2^{w(t-2)} + ··· + l₀, 0 <= kᵢ < 2^{w}, 0 <= lᵢ < 2^{w}. Hereinafter, in the 2nd embodiment, assume that w = 2 for simplicity of the explanation. At steps 502 to 507, a precomputation table is created. Namely, points of iP + jQ (i = 0, 1, 2, 3, j = 0, 1, 2, 3) are precomputed, then being stored into the precomputation table. At the step 502, inverse elements of (2y_{P}), (2y_{Q}), and (x_{Q}-x_{P}), which become necessary for computing 2(P), (P) + (Q), and (2Q) are computed. Here, y_{Q}, y_{P}, x_{Q}, and x_{P} denote the y-coordinate of the point Q, the y-coordinate of the point P, the x-coordinate of the point Q, and the x-coordinate of the point P, respectively. In much the same way as explained earlier, the utilization of the Montgomery trick for the computation of the inverse elements of (2y_{P}), (2y_{Q}), and (x_{Q}-x_{P}) makes it possible to accomplish the computation of the inverse elements by a 1-time inversion and 6-times multiplications. At the step 503, using 1/(2y_{P}), 1/(2y_{Q}), and 1/(x_{Q}-x_{P}), i.e., the inverse elements computed at the step 502, 2(P), 2(Q), and (P) + (Q) are computed. At the step 504, inverse elements of (x_{2P}-x_{P}), (x_{2P}-x_{Q}), (x_{2P}-x_{P+Q}), (x_{2Q}-x_{Q}), (x_{2Q}-x_{P}), (x_{2Q}-x_{P+Q}), and (x_{2Q}-x_{2P}), which become necessary for computing (P) + (2P), (Q) + (2P), (P + Q) + (2P), (Q) + (2Q), (P) + (2Q), (P + Q) + (2Q), and (2P) + (2Q), are computed. Here, x_{2P}, x_{P+Q}, and x_{2Q} denote the x-coordinate of the point 2P, the x-coordinate of the point (P + Q), and the x-coordinate of the point 2Q, respectively. In much the same way as explained earlier, the utilization of the Montgomery trick for the computation of the inverse elements of (x_{2P}-x_{P}), (x_{2P}-x_{Q}), (x_{2P}-x_{P+Q}), (x_{2Q}-x_{Q}), (x_{2Q}-x_{P}), (x_{2Q}-x_{P+Q}), and (x_{2Q}-x_{2P}) makes it possible to accomplish the computation of the inverse elements by a 1-time inversion and 18-times multiplications. At the step 505, using 1/(x_{2P}-x_{P}), 1/ (x_{2P}-x_{Q}), 1/ (x_{2P}-x_{P+Q}), 1/ (x_{2Q}-x_{Q}), 1/ (x_{2Q}-x_{P}), 1/ (x_{2Q}-x_{P+Q}), and 1/(x_{2Q}-x_{2P}), i.e., the inverse elements computed at the step 504, (P) + (2P), (Q) + (2P), (P + Q) + (2P), (Q) + (2Q), (P) + (2Q), (P + Q) + (2Q), and (2P) + (2Q) are computed. At the step 506, inverse elements of (x_{3P}-x_{2Q}), (x_{3Q}-x_{2P}), and (x_{3Q}-x_{3P}), which become necessary for computing (2Q) + (3P), (2P) + (3Q), and (3P) + (3Q), are computed. Here, x_{3P} and x_{3Q} denote the x-coordinate of the point 3P and the x-coordinate of the point 3Q, respectively. In much the same way as explained earlier, the utilization of the Montgomery trick for the computation of the inverse elements of (x_{3P}-x_{2Q}), (x_{3Q}-x_{2P}), and (x_{3Q}-x_{3P}) makes it possible to accomplish the computation of the inverse elements by a 1-time inversion and 6-times multiplications. At the step 507, using 1/(x_{3P}-x_{2Q}), 1/(x_{3Q}-x_{2P}), and 1/(x_{3Q}-x_{3P}), i.e., the inverse elements computed at the step 506, (2Q) + (3P), (2P) + (3Q), and (3P) + (3Q) are computed. Up until this processing, the points iP + jQ to be stored into the precomputation table have been precomputed. Next, using the points stored in the precomputation table, the point kP + lQ is computed. At a step 511, an initial value t-1 is substituted into the variable i. At a step 512, the point (kᵢP + lᵢQ) stored in the register is substituted into R. At a step 513, it is judged whether or not the variable i is equal to 0. If the variable i is equal thereto, the processing goes to a step 517. If not, the processing goes to a step 514. At the step 514, the variable i is decremented by 1. At a step 515, R multiplied by 2^{w} is computed, then being substituted into R. At a step 516, (kᵢP + lᵢQ) stored in the register is added to R, then being substituted into R. At the step 517, R is outputted as the point kP + lQ.

From the scalar values k, l and the point P and the point Q on the elliptic curve provided to the multi-scalar multiplication computation unit 103, the point kP + lQ on the elliptic curve can be computed in accordance with the above-described steps. The reason for this is basically the same as the reason in the 1st embodiment.

The computational cost of an addition and that of a doubling in the affine coordinates of an elliptic curve become equal to 2M + S + I and 2M + 2S + I, respectively. The Montgomery trick allows the 3-times inversions at the step 502, the 7-times inversions at the step 504, and the 3-times inversions at the step 506 to be accomplished by 6M + I, 18M + I, and 6M + I, respectively. Accordingly, the steps 502 and 503, the steps 504 and 505, and the steps 506 and 507 necessitate the computational cost of 12M + 5S + I, that of 32M + 7S + I, and that of 12M + 3S + I, respectively. Moreover, at the step 516, if one of kᵢ and lᵢ is not equal to 0, the addition with (kᵢP + lᵢQ) occurs. Here, the Jacobian coordinates are employed as the coordinates before the computation, and the modified Jacobian coordinates are employed as the coordinates after the computation. This makes it possible to reduce the computational cost, and this cost becomes equal to 9M + 5S. Also, at this time, the computational cost of the w-times doublings is necessary at the step 515. Here, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost, and this cost becomes equal to (4w-1)M + 4wS, which, here, is equal to 7M + 8S since the condition w = 2 is assumed. Meanwhile, at the step 516, if both of kᵢ and lᵢ are equal to 0, none of the addition occurs at the step 516. The probability of this condition's occurrence is equal to 2^{-2w}. Also, at this time, the computational cost of the w-times doublings is necessary at the step 515. Here, with respect to all the doublings, the modified Jacobian coordinates are employed as both the before-computation coordinates and the after-computation coordinates. This makes it possible to reduce the computational cost, and this cost becomes equal to 4wM + 4wS, which, here, is equal to 8M + 8S since the condition w = 2 is assumed. Furthermore, since the repetition number of the steps 514, 515, and 516 becomes (t-1) times, the computational cost of this repeated part as a whole becomes (t-1)(248M + 203S)/16. Consequently, the entire computational cost becomes equal to ((t-1) (248M + 203S)/16) + 56M + 15S + 3I. In general, it can be estimated that the computational cost S is an order of S = 0.8M and the computational cost I is an order of I = 40M. Thus, assuming these estimates and in the case of, e.g., 160 bits, i.e., t = 80, the computational cost of the algorithm in the above-described steps becomes equal to approximately 2211.2M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased.

Trying to perform the precomputation at the steps 502 to 507 without utilizing the Montgomery trick necessitates 11-times additions and 2-times doublings on the elliptic curve. The computational cost thereof becomes equal to 26M + 15S + 13I. Assuming that S = 0.8M and I = 40M, this computational cost is equal to 558.0M. Thus, in the case of 160 bits (i.e., t = 80), the entire computational cost becomes equal to approximately 2581.2M. Meanwhile, since none of the fixed point and the beforehand computation information has been given, the comb method is unusable. Accordingly, a method where the window method is used 2 times implements a high-speed computation. In this method, the computational cost in the case of 160 bits is equal to approximately 3228M. Consequently, the above-described computation algorithm implements the higher-speed computation.

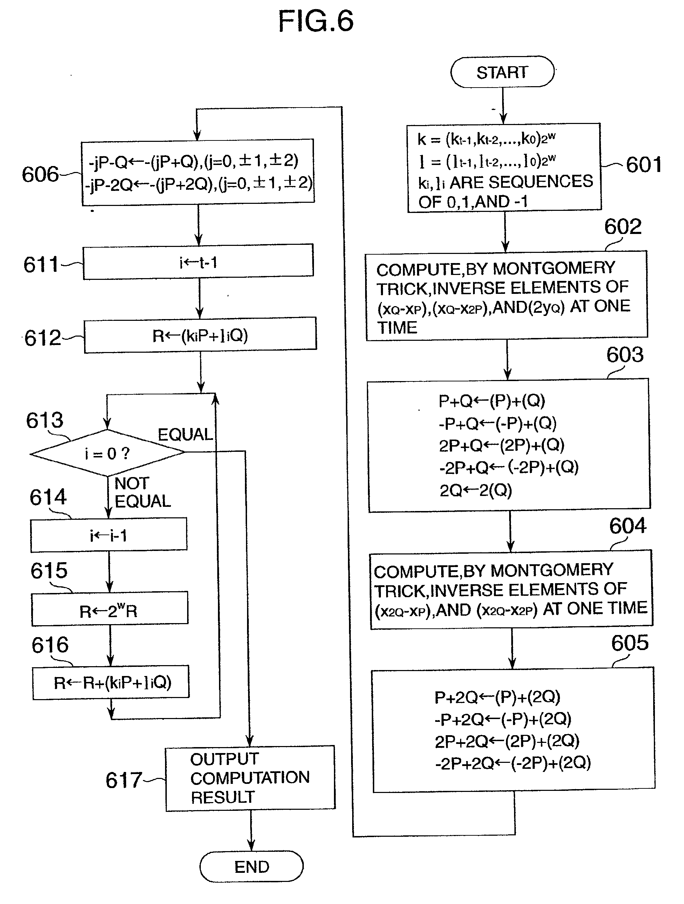

A 3rd embodiment is as follows: The multi-scalar multiplication computation unit 103 computes and outputs a point kP + lQ on an elliptic curve from scalar values k, l, a fixed point P and a point Q on the elliptic curve, and beforehand computation information -P, ±2P, ±3P, ···, ±((2^{w+2}-(-1)^{w}-3)/6)P. Thus, referring to FIG. 6, the explanation will be given below concerning the processing by the multi-scalar multiplication computation unit 103 that outputs kP + lQ when the scalar values k, l and the fixed point P and the point Q on the elliptic curve are given.

The multi-scalar multiplication computation unit 103 inputs the scalar values k, 1, the fixed point P and the point Q on the elliptic curve, and the beforehand computation information -P, ±2P, ±3P, ···, ±((2^{w+2}-(-1)^{w}-3)/6)P, then computing and outputting the point kP + lQ in accordance with the following steps:

At a step 601, the scalar values k, l are transformed into the 2^{w}-adic NAF (: non-adjacent form) representation: k = (kₜ₋₁, kₜ₋₂, ···, k₀)₂^{w}, l = (lₜ₋₁, lₜ₋₂ , ···, l₀)₂^{w}. Namely, it is assumed that, when the scalar values k, l are represented as k = kₜ₋₁2^{w(t-1)} + kₜ₋₂2^{w(t-2)} + ... + k₀, l = lₜ₋₁2^{w(t-1)} + lₜ₋₂2^{w(t-2)} + ··· + l₀, the following condition is satisfied: In kᵢ = kᵢ, _{w-1}2^{w-1} + ··· + k_{i,0}, lᵢ = l_{i, w-1}2^{w-1} + ··· + l_{i,0}, each k_{i, j}, l_{i, j} is equal to any one of 0, 1, -1, and either of arbitrary k_{i, j} and k_{i, j+1} is equal to 0, and either of arbitrary l_{i, j} and l_{i, j+1} is equal to 0. This is obtained as follows: *(This 2*^{*w*}*-adic NAF representation is implemented as follows:)* First, 2k and k are transformed into the 2^{w}-adic representation, and (3k-k) is computed without the carry-down. Next, a sequence obtained by dividing this computation result by 2 is separated on a w-bit basis. Hereinafter, in the 3rd embodiment, assume that w = 2 for simplicity of the explanation. At a step 602, inverse elements of (x_{Q}-x_{P}), (x_{Q}-x_{2P}), and (2y_{Q}) are computed. Here, x_{Q}, x_{P}, x_{2P}, and y_{Q} denote the x-coordinate of the point Q, the x-coordinate of the point P, the x-coordinate of the point 2P, and the y-coordinate of the point Q, respectively. In much the same way as explained earlier, the utilization of the Montgomery trick for the computation of the inverse elements makes it possible to accomplish the computation by a 1-time inversion and 6-times multiplications. The Montgomery trick has been described in H. Cohen, "A Course in Computational Algebraic Number Theory", GTM138, Springer-Verlag, (1993). At a step 603, (P) + (Q), (-P) + (Q), (2P) + (Q), (-2P) + (Q) , and 2 (Q) are computed. Since the x-coordinate of the point P is equal to the x-coordinate of the point (-P), the inverse element of (x_{Q}-x_{P}) computed at the step 602 can be used for the computation of (P) + (Q) and (-P) + (Q). Since the x-coordinate of the point 2P is equal to the x-coordinate of the point (-2P), the inverse element of (x_{Q}-x_{2P}) computed at the step 602 can be used for the computation of (2P) + (Q) and (-2P) + (Q). The inverse element of (2y_{Q}) computed at the step 602 can be used for the computation of 2(Q). At a step 604, inverse elements of (x_{2Q}-x_{P}) and (x_{2Q}-x_{2P}) are computed. Here, x_{2Q} denotes the x-coordinate of the point 2Q. In much the same way as explained earlier, the utilization of the Montgomery trick for the computation of the inverse elements makes it possible to accomplish the computation by a 1-time inversion and 3-times multiplications. At a step 605, (P) + (2Q), (-P) + (2Q), (2P) + (2Q), and (-2P) + (2Q) are computed. Since the x-coordinate of the point P is equal to the x-coordinate of the point (-P), the inverse element of (x_{2Q}-x_{P}) computed at the step 604 can be used for the computation of (P) + (2Q) and (-P) + (2Q). Since the x-coordinate of the point 2P is equal to the x-coordinate of the point (-2P), the inverse element of (x_{2Q}-x_{2P}) computed at the step 604 can be used for the computation of (2P) + (2Q) and (-2P) + (2Q). Next, at a step 606, -(jP + Q) and -(jP + 2Q) (j = 0, ±1, ±2) are computed. In general, with respect to a point P = (x, y) on an elliptic curve, the point (-P) is given by -P = (x, -y). Taking advantage of this property, -(jP + Q) and -(jP + 2Q) (j = 0, ±1, ±2) are computed. At a step 611, an initial value t-1 is substituted into the variable i. At a step 612, the point (kᵢP + lᵢQ) stored in the register is substituted into R. At a step 613, it is judged whether or not the variable i is equal to 0. If the variable i is equal thereto, the processing goes to a step 617. If not, the processing goes to a step 614. At the step 614, the variable i is decremented by 1. At a step 615, R multiplied by 2^{w} is computed, then being substituted into R. At a step 616, (kᵢP + lᵢQ) stored in the register is added to R, then being substituted into R. At the step 617, R is outputted as the point kP + lQ.

From the scalar values k, l, the fixed point P and the point Q on the elliptic curve, and the beforehand computation information -P, ±2P, ±3P, ···, ±((2^{w+2}-(-1)^{w}-3)/6)P provided to the multi-scalar multiplication computation unit 103, the point kP + lQ on the elliptic curve can be computed in accordance with the above-described steps. The reason for this is as follows: The step 612 gives R = kₜ₋₁P + l ₜ₋₁Q. After that, if, at the step 613, the variable i is judged to be not equal to 0, the step 614 leads to i = t-2. Moreover, the step 615 gives R = 2^{w} (kₜ₋₁P + l ₜ₋₁Q), and the step 616 leads to R = 2^{w} (kₜ₋₁P + l ₜ₋₁Q) + kₜ₋₂P + l ₜ₋₂Q. After that, going back to the step 613, the steps 614, 615, and 616 are repeated as long as i is not equal to 0. This repeated processing is finished at a point-in-time when i becomes equal to 0. As a result, R at that point-in-time becomes R = 2^{w} (···· 2^{w} (2^{w} (kₜ₋₁P + l ₜ₋₁Q) + kₜ₋₂P + l ₜ₋₂Q) + ···) + k₀P + l ₀Q. Arranging the right side results in (kₜ₋₁2^{w(t-1)} + kₜ₋₂2^{w(t-2)} + ··· + k₀)P + (lₜ₋₁2^{w(t-1)} + lₜ₋₂2^{w(t-2)} + ··· + l₀)Q. This means that R = kP + lQ.

The Montgomery trick allows the 3-times inversions at the step 602 to be accomplished by 6M + I, and allows the 2-times inversions at the step 604 to be accomplished by 3M + I. The additions and the doublings in the affine coordinates of the elliptic curve at the step 603 necessitate the computational cost of 10M + 6S, and the additions in the affine coordinates of the elliptic curve at the step 605 necessitate the computational cost of 8M + 4S. Moreover, at the step 616, if one of kᵢ and lᵢ is not equal to 0, the addition with (kᵢP + lᵢQ) occurs. Here, the Jacobian coordinates are employed as the coordinates before the computation, and the modified Jacobian coordinates are employed as the coordinates after the computation. This makes it possible to reduce the computational cost, and this cost becomes equal to 9M + 5S. Also, at this time, the computational cost of the w-times doublings is necessary at the step 615. Here, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost, and this cost becomes equal to (4w-1)M + 4wS, which, here, is equal to 7M + 8S since the condition w = 2 is assumed. Meanwhile, at the step 616, if both of kᵢ and lᵢ are equal to 0, none of the addition occurs at the step 616. The probability of this condition's occurrence is equal to (2/3)^{2w}. Also, at this time, the computational cost of the w-times doublings is necessary at the step 615. Here, with respect to all the doublings, the modified Jacobian coordinates are employed as both the before-computation coordinates and the after-computation coordinates. This makes it possible to reduce the computational cost, and this cost becomes equal to 4wM + 4wS, which, here, is equal to 8M + 8S since the condition w = 2 is assumed. Furthermore, since the repetition number of the steps 614, 615, and 616 becomes (t-1) times, the computational cost of this repeated part as a whole becomes (t-1) (1168M + 973S)/81. Consequently, the entire computational cost becomes equal to ((t-1) (1168M + 973S)/81) + 27M + 10S + 2I. In general, it can be estimated that the computational cost S is an order of S = 0.8M and the computational cost I is an order of I = 40M. Thus, assuming these estimates and in the case of, e.g., 160 bits, i.e., t = 80, the computational cost of the algorithm in the above-described steps becomes equal to approximately 2013.4M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased. Also, of the computations at the step 606, the computations of -(jP + Q) (j = 0, ±1, ±2) may be performed after the step 603. This is because (jP + Q) are given at the step 603.

Trying to perform the precomputation at the steps 602 and 604 without utilizing the Montgomery trick necessitates the 5-times inversions. Accordingly, the computational cost at the steps 602, 603, 604, and 605 becomes equal to 18M + 10S + 5I. Assuming that S = 0.8M and I = 40M, this computational cost is equal to 226M. Thus, in the case of 160 bits (i.e., t = 80), the entire computational cost becomes equal to approximately 2124.4M. Meanwhile, in the method where the comb method and the window method are in combined-use, the computational cost in the case of 160 bits is equal to approximately 2337M. Consequently, the above-described computation algorithm implements the higher-speed computation.

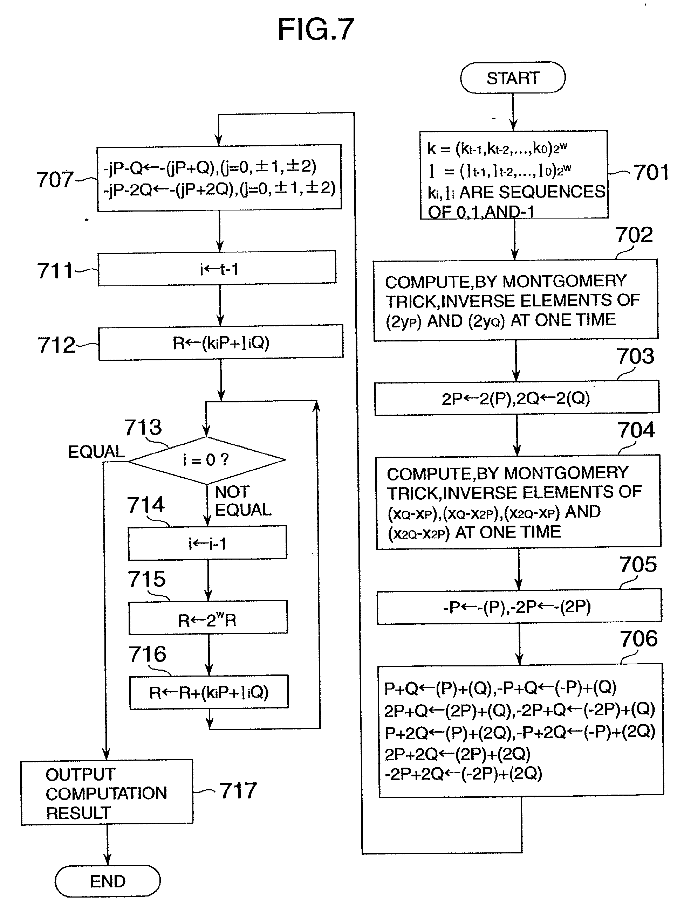

A 4th embodiment is as follows: The multi-scalar multiplication computation unit 103 computes and outputs a point kP + lQ on an elliptic curve from scalar values k, l and a point P and a point Q on the elliptic curve. Thus, referring to FIG. 7, the explanation will be given below concerning the processing by the multi-scalar multiplication computation unit 103 that outputs kP + lQ when the scalar values k, l and the point P and the point Q on the elliptic curve are given.

The multi-scalar multiplication computation unit 103 inputs the scalar values k, l and the point P and the point Q on the elliptic curve, then computing and outputting the point kP + lQ in accordance with the following steps:

At a step 701, the scalar values k, l are transformed into the 2^{w}-adic NAF (: non-adjacent form) representation: k = (kₜ₋₁, kₜ₋₂, ···, k₀)₂^{w}, l = (lₜ₋₁, lₜ₋₂, ···, l₀)₂^{w}. Namely, it is assumed that, when the scalar values k, l are represented as k = kₜ₋₁2^{w(t-1)} + kₜ₋₂2^{w(t-2)} + ··· + k₀, l = lₜ₋₁2^{w(t-1)} + lₜ₋₂2^{w(t-2)} + ··· + l₀, the following condition is satisfied: In kᵢ = k_{i, w-1}2^{w-1} + ··· + k_{i,0}, lᵢ = lᵢ, _{w-1}2^{w-1} + ··· + l_{i,0}, each k_{i, j}, l_{i, j} is equal to any one of 0, 1, -1, and either of arbitrary k_{i, j} and k_{i, j+1} is equal to 0, and either of arbitrary l_{i, j} and l_{i, j+1} is equal to 0. This is obtained as follows: First, 2k and k are transformed into the 2^{w}-adic representation, and (3k-k) is computed without the carry-under. Next, a sequence obtained by dividing this computation result by 2 is separated on a w-bit basis. Hereinafter, in the 4th embodiment, assume that w = 2 for simplicity of the explanation. At steps 702 to 707, a precomputation table is created. Namely, points of iP + jQ (i = 0, ±1, ±2, j = 0, ±1, ±2) are precomputed, then being stored into the precomputation table. At the step 702, inverse elements of (2y_{P}) and (2y_{Q}), which become necessary for computing 2(P) and (2Q) are computed. Here, y_{P} and y_{Q} denote the y-coordinate of the point P and the y-coordinate of the point Q, respectively. In much the same way as explained earlier, the utilization of the Montgomery trick for the computation of the inverse elements of (2y_{P}) and (2y_{Q}) makes it possible to accomplish the computation by a 1-time inversion and 3-times multiplications. At the step 703, using 1/(2y_{P}) and 1/(2y_{Q}), i.e., the inverse elements computed at the step 702, 2(P) and 2(Q) are computed. At the step 704, inverse elements of (x_{Q}-x_{P}), (x_{Q}-x_{2P}), (x_{2Q}-x_{P}), and (x_{2Q}-x_{2P}), which become necessary for computing (P) + (Q), (-P) + (Q), (2P) + (Q), (-2P) + (Q), (P) + (2Q), (-P) + (2Q), (2P) + (2Q), and (-2P) + (2Q), are computed. Here, x_{Q}, x_{P}, x_{2P}, and x_{2Q} denote the x-coordinate of the point Q, the x-coordinate of the point P, the x-coordinate of the point 2P, and the x-coordinate of the point 2Q, respectively. In much the same way as explained earlier, the utilization of the Montgomery trick for the computation of the inverse elements of (x_{Q}-x_{P}), (x_{Q}-x_{2P}), (x_{2Q}-x_{P}), and (x_{2Q}-x_{2P}) makes it possible to accomplish the computation by a 1-time inversion and 9-times multiplications. At the step 705, (-P) and (-2P) are computed. In general, with respect to a point P = (x, y) on an elliptic curve, the point (-P) is given by -P = (x, -y). At the step 706, using 1/(x_{Q}-x_{P}), 1/(x_{Q}-x_{2P}), 1/(x_{2Q}-x_{P}), and 1/(x_{2Q}-x_{2P}) computed at the step 704 and (-P) and (-2P) computed at the step 705, (P) + (Q), (-P) + (Q), (2P) + (Q), (-2P) + (Q), (P) + (2Q), (-P) + (2Q), (2P) + (2Q), and (-2P) + (2Q) are computed. At the step 707, -(jP + Q) and -(jP + 2Q) (j = 0, ±1, ±2) are computed. Up until this processing, the points iP + jQ to be stored into the precomputation table have been precomputed. Next, using the points stored in the precomputation table, the point kP + lQ is computed. At a step 711, an initial value t-1 is substituted into the variable i. At a step 712, the point (kᵢP + lᵢQ) stored in the register is substituted into R. At a step 713, it is judged whether or not the variable i is equal to 0. If the variable i is equal thereto, the processing goes to a step 717. If not, the processing goes to a step 714. At the step 714, the variable i is decremented by 1. At a step 715, R multiplied by 2^{w} is computed, then being substituted into R. At a step 716, (kᵢP + lᵢQ) stored in the register is added to R, then being substituted into R. At the step 717, R is outputted as the point kP + lQ.

From the scalar values k, l and the point P and the point Q on the elliptic curve provided to the multi-scalar multiplication computation unit 103, the point kP + lQ on the elliptic curve can be computed in accordance with the above-described steps. The reason for this is basically the same as the reason in the 3rd embodiment.

The computational cost of an addition and that of a doubling in the affine coordinates of an elliptic curve become equal to 2M + S + I and 2M + 2S + I, respectively. Here, M, S, and I denote the computational cost of a multiplication on a finite field, that of a squaring on the finite field, and that of an inversion on the finite field, respectively. The Montgomery trick allows the 2-times inversions at the step 702 to be accomplished by 3M + I, and allows the 4-times inversions at the step 704 to be accomplished by 9M + I. Accordingly, the steps 702 and 703 necessitate the computational cost of 7M + 4S + I, and the steps 704 to 706 necessitate that of 25M + 8S + I. Moreover, at the step 716, if one of kᵢ and lᵢ is not equal to 0, the addition with (kᵢP + lᵢQ) occurs. Here, the Jacobian coordinates are employed as the coordinates before the computation, and the modified Jacobian coordinates are employed as the coordinates after the computation. This makes it possible to reduce the computational cost, and this cost becomes equal to 9M + 5S. Also, at this time, the computational cost of the w-times doublings is necessary at the step 715. Here, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost, and this cost becomes equal to (4w-1)M + 4wS, which, here, is equal to 7M + 8S since the condition w = 2 is assumed. Meanwhile, at the step 716, if both of kᵢ and lᵢ are equal to 0, none of the addition occurs at the step 716. The probability of this condition's occurrence is equal to (2/3)^{2w}. Also, at this time, the computational cost of the w-times doublings is necessary at the step 715. Here, with respect to all the doublings, the modified Jacobian coordinates are employed as both the before-computation coordinates and the after-computation coordinates. This makes it possible to reduce the computational cost, and this cost becomes equal to 4wM + 4wS, which, here, is equal to 8M + 8S since the condition w = 2 is assumed. Furthermore, since the repetition number of the steps 714, 715, and 716 becomes (t-1) times, the computational cost of this repeated part as a whole becomes (t-1)(1168M + 973S)/81. Consequently, the entire computational cost becomes equal to ((t-1) (1168M + 973S)/81) + 32M + 12S + 2I. In general, it can be estimated that the computational cost S is an order of S = 0.8M and the computational cost I is an order of I = 40M. Thus, assuming these estimates and in the case of, e.g., 160 bits, i.e., t = 80, the computational cost of the algorithm in the above-described steps becomes equal to approximately 2019.9M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased.

Trying to perform the precomputation at the steps 702 to 707 without utilizing the Montgomery trick necessitates the computational cost of 20M + 12S + 6I. Assuming that S = 0.8M and I = 40M, this computational cost is equal to 269.6M. Thus, in the case of 160 bits (i.e., t = 80), the entire computational cost becomes equal to approximately 2167.9M. Meanwhile, since none of the fixed point and the beforehand computation information has been given, the comb method is unusable. Accordingly, a method where the window method is used 2 times implements a high-speed computation. In this method, the computational cost in the case of 160 bits is equal to approximately 3228M. Consequently, the above-described computation algorithm implements the higher-speed computation.

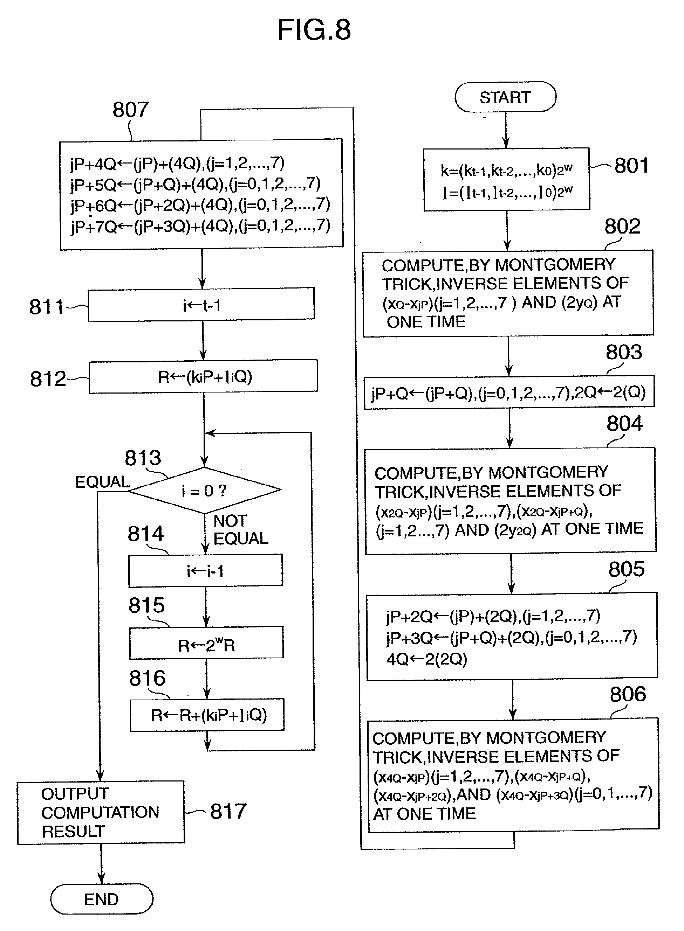

A 5th embodiment is as follows: The multi-scalar multiplication computation unit 103 computes and outputs a point kP + lQ on an elliptic curve from scalar values k, 1, a fixed point P and a point Q on the elliptic curve, and beforehand computation information 2P, 3P, ··, (2^{w}-1)P. Thus, referring to FIG. 8, the explanation will be given below concerning the processing by the multi-scalar multiplication computation unit 103 that outputs kP + lQ when the scalar values k, l and the fixed point P and the point Q on the elliptic curve are given.

The multi-scalar multiplication computation unit 103 inputs the scalar values k, 1, the fixed point P and the point Q on the elliptic curve, and the beforehand computation information 2P, 3P, ···, (2^{w}-1)P, then computing and outputting the point kP + lQ in accordance with the following steps:

At a step 801, the scalar values k, l are transformed into the 2^{w}-adic representation: k = (kₜ₋₁, kₜ₋₂, ···, k₀)₂^{w}, l = (lₜ₋₁, lₜ₋₂ , ··· , l₀)₂^{w}. Namely, the scalar values k, l are represented as k = kₜ₋₁2^{w(t-1)} + kₜ₋₂2^{w(t-2)} + ··· + k₀, l = lₜ₋₁2^{w(t-1)} + lₜ₋₂2^{w(t-2)} + ··· + l₀, 0 <= kᵢ < 2^{w}, 0 <= lᵢ < 2^{w}. Hereinafter, in the 5th embodiment, assume that the block width w = 3. At steps 802 to 807, precomputations are performed. Namely, points of iP + jQ (i = 0, 1, ···,7, j = 0, 1, ··· ,7) are precomputed, then being stored into a precomputation table. At the step 802, inverse elements of (x_{Q}-x_{jP}) (j = 1, 2, ··· ,7) and (2y_{Q}), which become necessary for computing (jP) + (Q) (j = 1, 2, ··· ,7) and (2Q), are computed. Here, x_{Q}, x_{jP}, and y_{Q} denote the x-coordinate of the point Q, the x-coordinate of the point jP, and the y-coordinate of the point Q, respectively. In much the same way as explained earlier, the utilization of the Montgomery trick for the computation of the inverse elements of (x_{Q}-x_{jP}) (j = 1, 2, ··· ,7) and (2y_{Q}) makes it possible to accomplish the computation by a 1-time inversion and 21-times multiplications. At the step 803, using 1/(x_{Q}-x_{jP}) (j = 1, 2, ··· ,7) and 1/(2y_{Q}), i.e., the inverse elements computed at the step 802, (jP) + (Q) (j = 1, 2, ··· ,7) and (2Q) are computed. At the step 804, inverse elements of (x_{2Q}-x_{jP}) (j = 1, 2, ··· ,7), (x_{2Q}-x_{jP+Q}) (j = 0, 1, ··· ,7), and (2y_{2Q}), which become necessary for computing (jP) + (2Q) (j = 1, 2, ··· 7), (jP + Q) + (2Q) (j = 0, 1, ··· ,7), and 2(2Q), are computed. Here, x_{2Q}, x_{jP+Q}, and y_{2Q} denote the x-coordinate of the point 2Q, the x-coordinate of the point jP + Q, and the y-coordinate of the point 2Q, respectively. In much the same way as explained earlier, the utilization of the Montgomery trick for the computation of the inverse elements of (x_{2Q}-x_{jP}) (j = 1, 2, ···,7), (x_{2Q}-x_{jP+Q}) (j = 0, 1, ···,7), and (2y_{2Q}) makes it possible to accomplish the computation by a 1-time inversion and 45-times multiplications. At the step 805, using 1/(x_{2Q}-x_{jP}) (j = 1, 2, ···,7), 1/(x_{2Q}-x_{jP+Q}) (j = 0, 1, ···,7), and 1/(2y_{2Q}), i.e., the inverse elements computed at the step 804, (jP) + (2Q) (j = 1, 2, ···,7), (jP + Q) + (2Q) (j = 0, 1, ··· ,7), and 2(2Q) are computed. At the step 806, inverse elements of (x_{4Q}-x_{jP}) (j = 1, 2, ···, 7), (x_{4Q}-x_{jP+Q}), (x_{4Q}-x_{jP+2Q}), and (x_{4Q}-x_{jP+3Q}) (j = 0, 1, ···,7), which become necessary for computing (jP) + (4Q) (j = 1, 2, ···,7), (jP + Q) + (4Q), (jP + 2Q) + (4Q), and (jP + 3Q) + (4Q) (j = 0, 1, ···,7), are computed. Here, x_{4Q}, x_{jP+2Q}, and x_{jP+3Q} denote the x-coordinate of the point 4Q, the x-coordinate of the point jP + 2Q, and the x-coordinate of the point jP + 3Q, respectively. In much the same way as explained earlier, the utilization of the Montgomery trick for the computation of the inverse elements of (x_{4Q}-x_{jP}) (j = 1, 2, ··· ,7), (x_{4Q}-x_{jP+Q}), (x_{4Q}-x_{jP+2Q}), and (x_{4Q}-x_{jP+3Q}) (j = 0, 1, ···, 7) makes it possible to accomplish the computation by a 1-time inversion and 90-times multiplications. At the step 807, using 1/(x_{4Q}-x_{jP}) (j = 1, 2, ···, 7), 1/(x_{4Q}-x_{jP+Q}), 1/(x_{4Q}-x_{jP+2Q}), and 1/(x_{4Q}-x_{jP+3Q}) (j = 0, 1, ··· ,7), i.e., the inverse elements computed at the step 806, (jP) + (4Q) (j = 1, 2, ··· ,7), (jP + Q) + (4Q), (jP + 2Q) + (4Q), and (jP + 3Q) + (4Q) (j = 0, 1, ···, 7) are computed. Up until this processing, the points iP + jQ to be stored into the precomputation table have been precomputed. Next, using the points stored in the precomputation table, the point kP + lQ is computed. At a step 811, an initial value t-1 is substituted into the variable i. At a step 812, the point (kᵢP + lᵢQ) stored in the register is substituted into R. At a step 813, it is judged whether or not the variable i is equal to 0. If the variable i is equal thereto, the processing goes to a step 817. If not, the processing goes to a step 814. At the step 814, the variable i is decremented by 1. At a step 815, R multiplied by 2^{w} is computed, then being substituted into R. At a step 816, (kᵢP + lᵢQ) stored in the register is added to R, then being substituted into R. At the step 817, R is outputted as the point kP + lQ.

From the scalar values k, l, the fixed point P and the point Q on the elliptic curve, and the beforehand computation information 2P, 3P, ···, (2^{w}-1)P provided to the multi-scalar multiplication computation unit 103, the point kP + lQ on the elliptic curve can be computed in accordance with the above-described steps. The reason for this is basically the same as the reason in the 1st embodiment.

The computational cost of an addition and that of a doubling in the affine coordinates of an elliptic curve become equal to 2M + S + I and 2M + 2S + I, respectively. Here, M, S, and I denote the computational cost of a multiplication on a finite field, that of a squaring on the finite field, and that of an inversion on the finite field, respectively. The Montgomery trick allows the 8-times inversions at the step 802, the 16-times inversions at the step 804, and the 31-times inversions at the step 806 to be accomplished by 21M + I, 45M + I, and 90M + I, respectively. Accordingly, the steps 802 and 803, the steps 804 and 805, and the steps 806 and 807 necessitate the computational cost of 37M + 9S + I, that of 77M + 17S + I, and that of 152M + 31S + I, respectively. Moreover, at the step 816, if one of kᵢ and lᵢ is not equal to 0, the addition with (kᵢP + lᵢQ) occurs. Here, the Jacobian coordinates are employed as the coordinates before the computation, and the modified Jacobian coordinates are employed as the coordinates after the computation. This makes it possible to reduce the computational cost, and this cost becomes equal to 9M + 5S. Also, at this time, the computational cost of the w-times doublings is necessary at the step 815. Here, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost, and this cost becomes equal to (4w-1)M + 4wS, which, here, is equal to 11M + 12S since the condition w = 3 is assumed. Meanwhile, at the step 816, if both of kᵢ and lᵢ are equal to 0, none of the addition occurs at the step 816. The probability of this condition's occurrence is equal to 2^{-2w}. Also, at this time, the computational cost of the w-times doublings is necessary at the step 815. Here, with respect to all the doublings, the modified Jacobian coordinates are employed as both the before-computation coordinates and the after-computation coordinates. This makes it possible to reduce the computational cost, and this cost becomes equal to 4wM + 4wS, which, here, is equal to 12M + 12S since the condition w = 3 is assumed. Furthermore, since the repetition number of the steps 814, 815, and 816 becomes (t-1) times, the computational cost of this repeated part as a whole becomes (t-1)(318M + 192S)/16. Consequently, the entire computational cost becomes equal to ((t-1)(318M + 192S)/16) + 266M + 57S + 3I. In general, it can be estimated that the computational cost S is an order of S = 0.8M and the computational cost I is an order of I = 40M. Thus, assuming these estimates and in the case of, e.g., 160 bits, i.e., t = 54 (160/3=53.3 ...; the bit number when 160 bits are divided by w bits), the computational cost of the algorithm in the above-described steps becomes equal to approximately 2202.5M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased.

Trying to perform the precomputation at the steps 802 to 807 without utilizing the Montgomery trick necessitates 53-times additions and 2-times doublings on the elliptic curve. The computational cost thereof becomes equal to 110M + 57S + 55I. Assuming that S = 0.8M and I = 40M, this computational cost is equal to 2355.6M. Thus, in the case-of 160 bits (i.e., t = 54), the entire computational cost becomes equal to approximately 4126.5M. Meanwhile, in the method where the comb method and the window method are in combined-use, the computational cost in the case of 160 bits is equal to approximately 2337M. Consequently, the above-described computation algorithm implements the higher-speed computation.

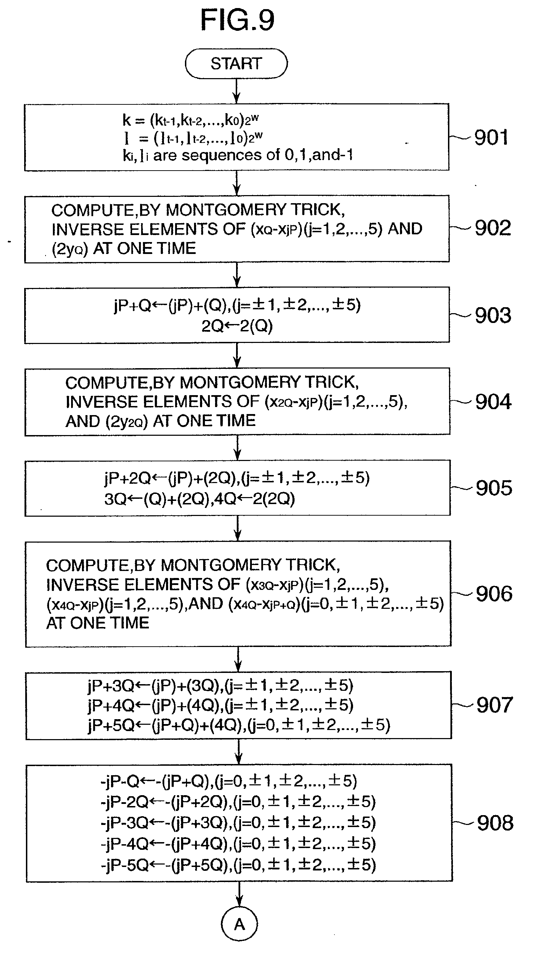

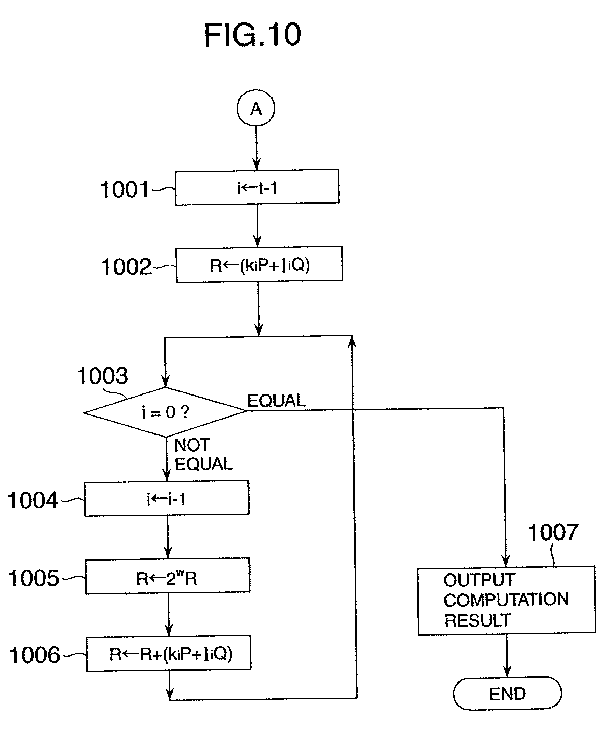

A 6th embodiment is as follows: The multi-scalar multiplication computation unit 103 computes and outputs a point kP + lQ on an elliptic curve from scalar values k, l, a fixed point P and a point Q on the elliptic curve, and beforehand computation information -P, ±2P, ±3P, ···, ±((2^{w+2}-(-1)^{w}-3)/6)P. Thus, referring to FIG. 9 and FIG. 10, the explanation will be given below concerning the processing by the multi-scalar multiplication computation unit 103 that outputs kP + lQ when the scalar values k, l and the fixed point P and the point Q on the elliptic curve are given.

The multi-scalar multiplication computation unit 103 inputs the scalar values k, 1, the fixed point P and the point Q on the elliptic curve, and the beforehand computation information -P, ±2P, ±3P, ···, ±((2^{w+2}-(-1)^{w}-3)/6)P, then computing and outputting the point kP + lQ in accordance with the following steps:

At a step 901, the scalar values k, l are transformed into the 2^{w}-adic NAF representation: k = (kₜ₋₁, kₜ₋₂, ···, k₀)₂^{w}, l = (lₜ₋₁, lₜ₋₂, ···, l₀)₂^{w}. Namely, it is assumed that, when the scalar values k, l are represented as k = kₜ₋₁2^{w(t-1)} + kₜ₋₂2^{w(t-2)} + ·· + k₀, l = lₜ₋₁2^{w(t-1)} + lₜ₋₂2^{w(t-2)} + ··· + l₀, the following condition is satisfied: In kᵢ = k_{i, w-1}2^{w-1} + ··· + k_{i,0}, lᵢ = l_{i, w-1} 2^{w-1} + ··· + l_{i,0}, each k_{i, j}, l_{i, j} is equal to any one of 0, 1,-1, and either of arbitrary k_{i, j} and k_{i, j+1} is equal to 0, and either of arbitrary l_{i, j} and l_{i, j+1} is equal to 0. This is obtained as follows: First, 2k and k are transformed into the 2^{w}-adic representation, and (3k-k) is computed without the carry-under. Next, a sequence obtained by dividing this computation result by 2 is separated on a w-bit basis. Hereinafter, in the 6th embodiment, assume that w = 3. At steps 902 to 908, a precomputation table is created. Namely, points of iP + jQ (i = 0, ±1, ±2, ···, ±5, j = 0, ±1, ±2, ···, ±5) are precomputed, then being stored into the precomputation table. At the step 902, inverse elements of (x_{Q}-x_{jP}) (j = 1, 2, ···, 5) and (2y_{Q}), which become necessary for computing (jP) + (Q) (j = ±1, ±2, ···, ±5) and (2Q), are computed. Here, x_{Q}, x_{jP}, and y_{Q} denote the x-coordinate of the point Q, the x-coordinate of the point jP, and the y-coordinate of the point Q, respectively. The utilization of the Montgomery trick for the computation of the inverse elements of (x_{Q}-x_{jP}) (j = 1, 2, ···, 5) and (2y_{Q}) makes it possible to accomplish the computation by a 1-time inversion and 15-times multiplications. At the step 903, using 1/(x_{Q}-x_{jP}) (j = 1, 2, ···, 5) and 1/(2y_{Q}), i.e., the inverse elements computed at the step 902, (jP) + (Q) (j = ±1, ±2, ···, ±5) and (2Q) are computed. At the step 904, inverse elements of (x_{2Q}-x_{jP}) (j = 1, 2, ···, 5), (x_{2Q}-x_{Q}), and (2y_{2Q}), which become necessary for computing (jP) + (2Q) (j = ±1, ±2, ···, ±5), (Q) + (2Q), and 2(2Q), are computed. Here, x_{2Q} and y_{2Q} denote the x-coordinate of the point 2Q and the y-coordinate of the point 2Q, respectively. In much the same way as explained earlier, the utilization of the Montgomery trick for the computation of the inverse elements of (x_{2Q}-x_{jP}) (j = 1, 2, ··· , 5), (x_{2Q}-x_{Q}), and (2y_{2Q}) makes it possible to accomplish the computation by a 1-time inversion and 18-times multiplications. At the step 905, using 1/(x_{2Q}-x_{jP}) (j = 1, 2, ··· , 5), 1/(x_{2Q}-x_{Q}), and 1/(2y_{2Q}), i.e., the inverse elements computed at the step 904, (jP) + (2Q) (j = ±1, ±2, ···, ±5), (Q) + (2Q), and 2(2Q) are computed. At the step 906, inverse elements of (x_{3Q}-x_{jP}), (x_{4Q}-x_{jP}) (j = 1, 2, ··· , 5), and (x_{4Q}-x_{jP+Q}) (j = 0, ±1, ±2, ···, ±5), which become necessary for computing (jP) + (3Q), (jP) + (4Q) (j = ±1, ±2, ···, ±5), (jP + Q) + (4Q) (j = 0, ±1, ±2, ···, ±5), are computed. Here, x_{3Q} and x_{4Q} denote the x-coordinate of the point 3Q and the x-coordinate of the point 4Q, respectively. In much the same way as explained earlier, the utilization of the Montgomery trick for the computation of the inverse elements of (x_{3Q}-x_{jP}), (x_{4Q}-x_{jP}) (j = 1, 2, ···, 5), and (x_{4Q}-x_{jP+Q}) (j = 0, ±1, ±2, ···, ±5) makes it possible to accomplish the computation by a 1-time inversion and 60-times multiplications. At the step 907, using 1/(x_{3Q}-x_{jP}), 1/(x_{4Q}-x_{jP}) (j = 1, 2, ···, 5), and 1/(x_{4Q}-x_{jP+Q}) (j = 0, ±1, ±2, ···, ±5), i.e., the inverse elements computed at the step 906, (jP) + (3Q), (jP) + (4Q) (j = ±1, ±2, · ··, ±5), (jP + Q) + (4Q) (j = 0, ±1, ±2, ···, ±5) are computed. At the step 908, -(jP + Q), -(jP + 2Q), -(jP + 3Q), -(jP + 4Q), and -(jP + 5Q) (j = 0, ±1, ±2, ···, ±5) are computed. In general, with respect to a point P = (x, y) on an elliptic curve, the point (-P) is given by -P = (x, -y). Up until this processing, the points iP + jQ to be stored into the precomputation table have been precomputed. Next, using the points stored in the precomputation table, the point kP + lQ is computed. At a step 1001, an initial value t-1 is substituted into the variable i. At a step 1002, the point (kᵢP + lᵢQ) stored in the register is substituted into R. At a step 1003, it is judged whether or not the variable i is equal to 0. If the variable i is equal thereto, the processing goes to a step 1007. If not, the processing goes to a step 1004. At the step 1004, the variable i is decremented by 1. At a step 1005, R multiplied by 2^{w} is computed, then being substituted into R. At a step 1006, (kᵢP + lᵢQ) stored in the register is added to R, then being substituted into R. At the step 1007, R is outputted as the point kP + lQ.

From the scalar values k, l, the fixed point P and the point Q on the elliptic curve, and the beforehand computation information -P, ±2P, ±3P, ···, ±((2^{w+2}-(-1)^{w}-3)/6)P provided to the multi-scalar multiplication computation unit 103, the point kP + lQ on the elliptic curve can be computed in accordance with the above-described steps. The reason for this is basically the same as the reason in the 3rd embodiment.

The computational cost of an addition and that of a doubling in the affine coordinates of an elliptic curve become equal to 2M + S + I and 2M + 2S + I, respectively. Here, M, S, and I denote the computational cost of a multiplication on a finite field, that of a squaring on the finite field, and that of an inversion on the finite field, respectively. The Montgomery trick allows the 6-times inversions at the step 902, the 7-times inversions at the step 904, and the 21-times inversions at the step 906 to be accomplished by 15M + I, 18M + I, and 60M + I, respectively. Accordingly, the steps 902 and 903, the steps 904 and 905, and the steps 906 and 907 necessitate the computational cost of 34M + 12S + I, that of 42M + 13S + I, and that of 122M + 31S + I, respectively. Moreover, at the step 1006, if one of kᵢ and lᵢ is not equal to 0, the addition with (kᵢP + lᵢQ) occurs. Here, the Jacobian coordinates are employed as the coordinates before the computation, and the modified Jacobian coordinates are employed as the coordinates after the computation. This makes it possible to reduce the computational cost, and this cost becomes equal to 9M + 5S. Also, at this time, the computational cost of the w-times doublings is necessary at the step 1005. Here, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost, and this cost becomes equal to (4w-1)M + 4wS, which, here, is equal to 11M + 12S since the condition w = 3 is assumed. Meanwhile, at the step 1006, if both of kᵢ and lᵢ are equal to 0, none of the addition occurs at the step 1006. The probability of this condition's occurrence is equal to (2/3)^{2w}. Also, at this time, the computational cost of the w-times doublings is necessary at the step 1005. Here, with respect to all the doublings, the modified Jacobian coordinates are employed as both the before-computation coordinates and the after-computation coordinates. This makes it possible to reduce the computational cost, and this cost becomes equal to 4wM + 4wS, which, here, is equal to 12M + 12S since the condition w = 3 is assumed. Furthermore, since the repetition number of the steps 1004, 1005, and 1006 becomes (t-1) times, the computational cost of this repeated part as a whole becomes (t-1)(14068M + 12073S)/729. Consequently, the entire computational cost becomes equal to ((t-1)(14068M + 12073S)/729) + 198M + 56S + 3I. In general, it can be estimated that the computational cost S is an order of S = 0.8M and the computational cost I is an order of I = 40M. Thus, assuming these estimates and in the case of, e.g., 160 bits, i.e., t = 54, the computational cost of the algorithm in the above-described steps becomes equal to approximately 2120.8M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased. Also, regarding the computations at the step 906 and the step 907, the computations of the inverse elements of (x_{4Q}-x_{jP+Q}) (j = 0, ±1, ±2, ···, ±5) at the step 906 and the computations of (jP + Q) + (4Q) (j = 0, ±1, ±2, ···, ±5) at the step 907 need not necessarily be performed. Instead, after the step 907, inverse elements of (x_{5Q}-x_{jP}) (j = 1, 2, ···, 5) are computed using the Montgomery trick. After that, (jP) + (5Q) (j = 0, ±1, ±2, ···, ±5) may be computed using the inverse elements of (x_{5Q}-x_{jP}).

Trying to perform the precomputation at the steps 902 to 908 without utilizing the Montgomery trick necessitates 52-times additions and 2-times doublings on the elliptic curve. The computational cost thereof becomes equal to 108M + 56S + 54I. Assuming that S = 0.8M and I = 40M, this computational cost is equal to 2312.8M. Thus, in the case of 160 bits (i.e., t = 54), the entire computational cost becomes equal to approximately 4037.8M. Meanwhile, in the method where the comb method and the window method are in combined-use, the computational cost in the case of 160 bits is equal to approximately 2337M. Consequently, the above-described computation algorithm implements the higher-speed computation.

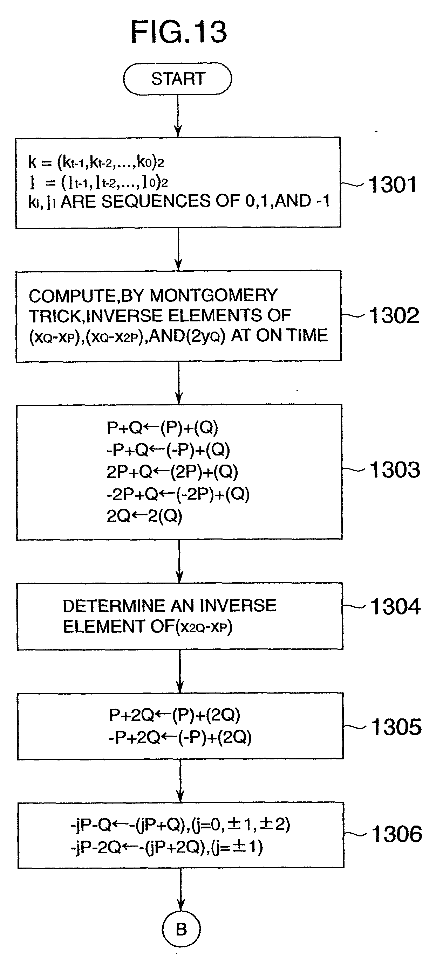

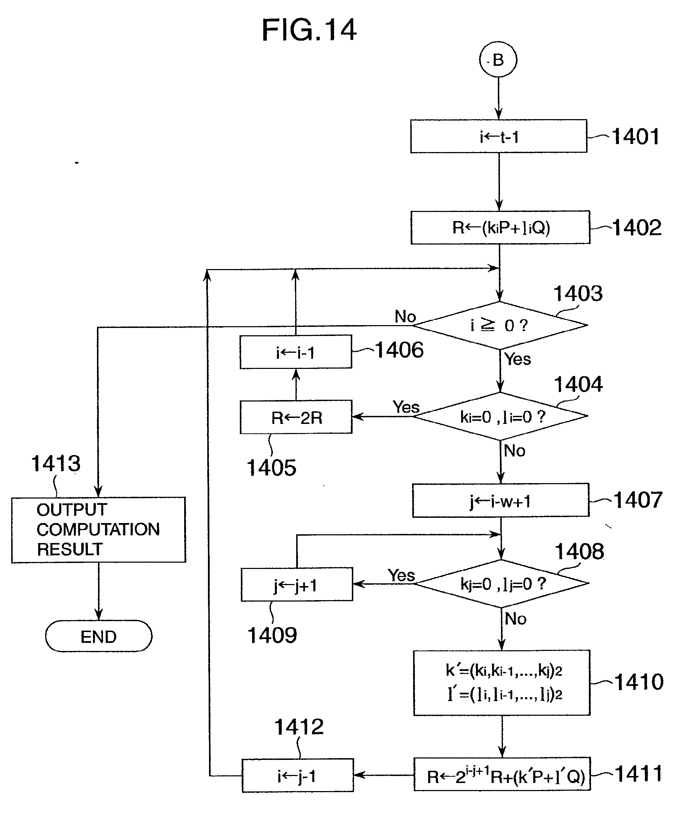

A 7th embodiment is as follows: The multi-scalar multiplication computation unit 103 computes and outputs a point kP + lQ on an elliptic curve from scalar values k, l, a fixed point P and a point Q on the elliptic curve, and beforehand computation information -P, ±2P, ±3P, ···, ±((2^{w+2}-(-1)^{w}-3)/6)P. Thus, referring to FIG. 13 and FIG. 14, the explanation will be given below concerning the processing by the multi-scalar multiplication computation unit 103 that outputs kP + lQ when the scalar values k, l and the fixed point P and the point Q on the elliptic curve are given.

The multi-scalar multiplication computation unit 103 inputs the scalar values k, l, the fixed point P and the point Q on the elliptic curve, and the beforehand computation information -P, ±2P, ±3P, ···, ±((2^{w+2}-(-1)^{w}-3)/6)P, then computing and outputting the point kP + lQ in accordance with the following steps:

At a step 1301, the scalar values k, l are transformed into the binary *(2-adic)* NAF representation: k = (kₜ₋₁, kₜ₋₂ , ···, k₀)₂, l = (lₜ₋₁, lₜ₋₂ , ··· , l₀)₂. Namely, it is assumed that, when the scalar values k, l are represented as k = kₜ₋₁2^{(t-1)} + kₜ₋₂2^{(t-2)} + ··· + k₀, l = lₜ₋₁2^{(t-1)} + lₜ₋₂2^{(t-2)} + ··· + l₀, the following condition is satisfied: Each kᵢ, lᵢ is equal to any one of 0, 1,-1, and either of kᵢ and kᵢ₊₁ is equal to 0 for arbitrary kᵢ, kᵢ₊₁, and either of lᵢ and lᵢ₊₁ is equal to 0 for arbitrary lᵢ, lᵢ₊₁. This is obtained as follows: (3k-k) is transformed into the binary representation, and the binary-represented (3k-k) is computed without the carry-under, and then this computation result is divided by 2. In the 7th embodiment, hereinafter, assume that w = 2 for simplicity of the explanation. At a step 1302, inverse elements of (x_{Q}-x_{P}), (x_{Q}-x_{2P}), and (2y_{Q}) are computed. Here, x_{Q}, x_{P}, x_{2P}, and y_{Q} denote the x-coordinate of the point Q, the x-coordinate of the point P, the x-coordinate of the point 2P, and the y-coordinate of the point Q, respectively. In much the same way as explained earlier, the utilization of the Montgomery trick for the computation of the inverse elements of (x_{Q}-x_{P}), (x_{Q}-x_{2P}), and (2y_{Q}) makes it possible to accomplish the computation by a 1-time inversion and 6-times multiplications. At a step 1303, (P) + (Q), (-P) + (Q), (2P) + (Q), (-2P) + (Q), and 2(Q) are computed. Since the x-coordinate of the point P is equal to the x-coordinate of the point (-P), the inverse element of (x_{Q}-x_{P}) computed at the step 1302 can be used for the computation of (P) + (Q) and (-P) + (Q). Since the x-coordinate of the point 2P is equal to the x-coordinate of the point (-2P), the inverse element of (x_{Q}-x_{2P}) computed at the step 1302 can be used for the computation of (2P) + (Q) and (-2P) + (Q). The inverse element of (2y_{Q}) computed at the step 1302 can be used for the computation of 2(Q). At a step 1304, an inverse element of (x_{2Q}-x_{P}) is computed. Here, x_{2Q} denotes the x-coordinate of the point 2Q. Since the computation of the inverse element of (x_{2Q}-x_{P}) is only one computation, the computation is performed using an ordinary inverse-element computation, At a step 1305, (P) + (2Q) and (-P) + (2Q) are computed. Since the x-coordinate of the point P is equal to the x-coordinate of the point (-P), the inverse element of (x_{2Q}-x_{P}) computed at the step 1304 can be used for the computation of (P) + (2Q) and (-P) + (2Q). Next, at a step 1306, -(jP + Q) (j = 0, ±1, ±2) and -(jP + 2Q) (j = ±1) are computed. In general, with respect to a point P = (x, y) on an elliptic curve, the point (-P) is given by -P = (x, -y). At a step 1401, an initial value t-1 is substituted into the variable i. At a step 1402, the point (kᵢP + lᵢQ) stored in the register is substituted into R. At a step 1403, it is judged whether or not the variable i >= 0. If i < 0, the processing goes to a step 1413. If i >= 0, the processing goes to a step 1404. At the step 1404, it is judged whether or not kᵢ = 0 and lᵢ = 0. If kᵢ = 0 and lᵢ = 0, the processing goes to a step 1405. If one of kᵢ and lᵢ is not equal to 0, the processing goes to a step 1407. The explanation will be given regarding the case where, at the step 1404, kᵢ = 0 and lᵢ = 0: At the step 1405, R multiplied by 2 is computed, then being substituted into R. In addition, at a step 1406, the variable i is decremented by 1, then going back to the step 1403. Next, the explanation will be given regarding the case where, at the step 1404, one of kᵢ and lᵢ is not equal to 0: At the step 1407, i-w+1 is substituted into the variable j. At a step 1408, it is judged whether or not kⱼ = 0 and lⱼ = 0. If kⱼ = 0 and lⱼ = 0, the processing goes to a step 1409. If one of kⱼ and lⱼ is not equal to 0, the processing goes to a step 1410. The explanation will be given regarding the case where, at the step 1408, kⱼ = 0 and lⱼ = 0: At the step 1409, the variable j is incremented by 1, then going back to the step 1408. Next, explanation will be given regarding the case where, at the step 1408, one of kⱼ and lⱼ is not equal to 0: At the step 1410, k' = (kᵢ, kᵢ₋₁ , ··· , kⱼ)₂, l' = (lᵢ, lᵢ₋₁ , ···, lⱼ)₂ are computed. At a step 1411, R multiplied by 2^{i-j + 1} is computed, and (kᵢP + lᵢQ) stored in the register is added to the computed point, then being substituted into R. At a step 1412, j-1 is substituted into the variable i, then going back to the step 1403. At the step 1413, R is outputted as the point kP + lQ.

From the scalar values k, l, the fixed point P and the point Q on the elliptic curve, and the beforehand computation information -P, ±2P, ±3P, ···, ±((2^{w+2}-(-1)^{w}-3)/6)P provided to the multi-scalar multiplication computation unit 103, the point kP + lQ on the elliptic curve can be computed in accordance with the above-described steps. The reason for this is as follows: An assumption is made that R is represented as R = kᵥP + lᵥQ. The step 1402 gives R = kₜ₋₁P + l ₜ₋₁Q. At the step 1403 thereafter, k and l are equal to kᵥ and lᵥ respectively in the highest-order 1 bit. At the step 1403, it is assumed that k and l have been equal to kᵥ and lᵥ respectively in the higher-order u bits. If it has been judged that i >= 0 at the step 1403 and that kᵢ = 0 and lᵢ = 0 at the step 1404, R is multiplied by 2, and then the processing goes back to the step 1403. In this case, k and l become equal to kᵥ and lᵥ respectively in the higher-order u + 1 (> u) bits. Meanwhile, if it has been judged that i >= 0 at the step 1403 and that one of kᵢ and lᵢ is not equal to 0 at the step 1404, *and if it has been judged that one of k*_{*j*} *and l*_{*j*} *is not equal to 0 at the step 1408,* the result becomes R = 2^{i-j + 1}R + (k'P + l'Q), and then the processing goes back to the step 1403. Here, on account of k' = (kᵢ, kᵢ₋₁ , ··· , kⱼ)₂, l' = (lᵢ, lᵢ₋₁ , ··· , lⱼ)₂, k and l become equal to kᵥ and lᵥ respectively in the higher-order u + i-j + 1 (> u) bits. If i >= 0 at the step 1403, the bit number in which k and l become equal to kᵥ and lᵥ respectively will be increased without fail. If i < 0 at the step 1403, R is outputted. In this case, k and l become equal to kᵥ and lᵥ respectively in the higher-order t bits, which, namely, is an occasion when k = kᵥ and l = lᵥ hold. This, accordingly, means that kP + lQ has been computed.

The Montgomery trick allows the 3-times inversions at the step 1302 to be accomplished by 6M + I. The additions and the doublings in the affine coordinates of the elliptic curve at the step 1303 necessitate the computational cost of 10M + 6S, and the additions in the affine coordinates of the elliptic curve at the step 1305 necessitate the computational cost of 4M + 2S. The average number of times at which it has been judged that kᵢ = 0 and lᵢ = 0 at the step 1404 is equal to 0.8 times (because 2/3 of the bits are equal to 0 on average). The average number of times at which it has been judged that kⱼ = 0 and lⱼ = 0 at the step 1408 is also equal to 0.8 times. In that case, when the processing goes to the step 1409 next, it turns out that the loop by the amount of 0.8 times will be performed without fail. The bit length of k', l' at the step 1410 becomes equal to (w-0.8) bits on average. Accordingly, the probability that the addition occurs for a 1-bit scalar value becomes equal to 1/(w + 0.8). In the addition at the step 1411, the Jacobian coordinates are employed as the coordinates before the computation, and the modified Jacobian coordinates are employed as the coordinates after the computation. This makes it possible to reduce the computational cost, and this cost becomes equal to 9M + 5S. In the doublings at the step 1411, with respect to the last doubling, the modified Jacobian coordinates are employed as the before-computation coordinates, and the Jacobian coordinates are employed as the after-computation coordinates. Simultaneously, with respect to the doublings other than the last one, the modified Jacobian coordinates are employed as both the before-computation coordinates and the after-computation coordinates. This makes it possible to reduce the computational cost of the last doubling and that of the doublings other than the last one, which become equal to 3M + 4S and 4M + 4S, respectively. In the doubling at the step 1405, the modified Jacobian coordinates are employed as both the before-computation coordinates and the after-computation coordinates. This makes it possible to reduce the computational cost, and this cost becomes equal to 4M + 4S. Determining the computational cost of the part in FIG. 14 as a whole, the cost becomes (t-w)/(w + 0.8){(4w + 11.2)M + (4w + 8.2)S}. Consequently, the entire computational cost becomes equal to (t-w)/(w + 0.8){(4w + 11.2)M + (4w + 8.2)S} + 20M + 8S + 2I. In general, it can be estimated that the computational cost S is an order of S = 0.8M and the computational cost I is an order of I = 40M. Thus, assuming these estimates and in the case of, e.g., 160 bits (the bit length of scalar values k, l), the computational cost of the algorithm in the above-described steps becomes equal to approximately 1921.1M.

Incidentally, the computations can also be performed even if it is modified how the coordinates or the inverse of the targets for which the Montgomery trick is to be utilized should be employed in the above-described steps. In that case, the computational cost that becomes necessary for the computations is generally increased. Also, the point k'P + l'Q that will not appear at the step 1410 in FIG. 14 need not necessarily be determined at the precomputation part. By doing this, it becomes possible to expect an even further speeding-up of the precomputation.

Trying to perform the precomputation at the steps 1302 and 1306 without utilizing the Montgomery trick necessitates the 4-times inversions. Accordingly, the computational cost at the steps 1302 to 1306 becomes equal to 14M + 8S + 4I. Assuming that S = 0.8M and I = 40M, this computational cost is equal to 180.4M. Thus, in the case of 160 bits, the entire computational cost becomes equal to approximately 1967.6M. Meanwhile, in the method where the comb method and the window method are in combined-use, the computational cost in the case of 160 bits is equal to approximately 2337M. Consequently, the above-described computation algorithm implements the higher-speed computation.

The processings explained in the 1st to the 7th embodiments may also be executed using a program stored in a computer-readable storage medium. In that case, the program is read into the storage unit in FIG. 1, and the processing unit, i.e., an operation apparatus such as a CPU, executes the processings in accordance with this program.

Other than the use for the signature verification by the elliptic curve digital signature algorithm ECDSA, the multi-scalar multiplication computation methods explained in the 1st to the 7th embodiments are usable for an elliptic curve cryptographic scheme as long as the cryptographic scheme employs the multi-scalar multiplication. For example, an elliptic curve key agreement scheme DLSVDP-MQV necessitates a computation of k(P + 1Q), i.e., kP + klQ, and accordingly the multi-scalar multiplication computation methods explained in the 1st to the 7th embodiments are usable for this computation. The elliptic curve key agreement scheme DLSVDP-MQV has been described in IEEE P1363/D13 "Standard Specifications for Public Key Cryptography" (1999).

Incidentally, the processings explained so far can be implemented by some hardware that employs an operation apparatus such as a CPU and a storage apparatus such as a memory, or a computer that employs an operation apparatus and a memory. Also, a software program for executing the above-described processings may be created, and the program may be stored into such a storage medium as a FD or a CD-ROM so as to be executed.

The present invention described so far implements the speeding-up of the multi-scalar multiplication computation used in the signature verification by the signature verification apparatus. Accordingly, it becomes possible to implement the speeding-up of the signature verification.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A multi-scalar multiplication computation method for computing a multi-scalar multiplied point from a plurality of scalar values and a plurality of points in an elliptic curve in an elliptic curve signature verification method (ECDSA), said scalar values being derived from a value of a signature, said points being positioned on said elliptic curve, said multi-scalar multiplication computation method comprising the steps of:
(1201) representing said scalar values as sequences of 0, 1, and -1,
(1203) computing, by once inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

2. A multi-scalar multiplication computation method for computing a multi-scalar multiplied point from a plurality of scalar values and a plurality of points in an elliptic curve in an elliptic curve signature verification method (ECDSA), said scalar values being derived from a value of a signature, said points being positioned on said elliptic curve, said multi-scalar multiplication computation method comprising the steps of:
(1203) computing, by a 1-time inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

3. A multi-scalar multiplication computation method for computing a multi-scalar multiplied point from a plurality of scalar values and a plurality of points in an elliptic curve in an elliptic curve signature verification method (ECDSA), said scalar values being derived from a value of a signature, said points being positioned on said elliptic curve, said multi-scalar multiplication computation method comprising the steps of:
(1201) representing said scalar values as sequences of 0, 1, and -1,
(1203) computing predetermined number of points on said elliptic curve from said points positioned on said elliptic curve, and
(1204) computing said multi-scalar multiplied point from said scalar values, said points positioned on said elliptic curve, and said computed points on said elliptic curve.

4. A multi-scalar multiplication computation method for computing a multi-scalar multiplied point from a plurality of scalar values and a plurality of points in an elliptic curve in an elliptic curve cryptosystem, said points being positioned on said elliptic curve, said multi-scalar multiplication computation method comprising the steps of:
(1201) representing said scalar values as sequences of 0, 1, and -1,
(1203) computing, by once inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

5. A multi-scalar multiplication computation method for computing a multi-scalar multiplied point from a plurality of scalar values and a plurality of points in an elliptic curve in an elliptic curve cryptosystem, said points being positioned on said elliptic curve, said multi-scalar multiplication computation method comprising the steps of:
(1203) computing, by once inversion, predetermined number of points on said elliptic curve from said points positioned on said elliptic curve, and
(1204) computing said multi-scalar multiplied point from said scalar values; said points positioned on said elliptic curve, and said computed points on said elliptic curve.

6. A multi-scalar multiplication computation method for computing a multi-scalar multiplied point from a plurality of scalar values and a plurality of points in an elliptic curve in an elliptic curve cryptosystem, said points being positioned on said elliptic curve, said multi-scalar multiplication computation method comprising the steps of:
(1201) representing said scalar values as sequences of 0, 1, and -1,
(1203) computing predetermined number of points on said elliptic curve from said points positioned on said elliptic curve, and
(1204) computing said multi-scalar multiplied point from said scalar values, said points positioned on said elliptic curve, and said computed points on said elliptic curve.

7. A signature data verification method for verifying signature data, comprising a step of computing a multi-scalar multiplication by using said multi-scalar multiplication computation method as claimed in Claim 1.

8. A data generation method for generating 2nd data from 1st data by using a private key of a sender, said 1st data being generated by using a private key of a receiver, said data generation method comprising a step of computing a multi-scalar multiplication by using said multi-scalar multiplication computation method as claimed in Claim 1.

9. A multi-scalar multiplication computation apparatus (1101) for computing a multi-scalar multiplied point from a plurality of scalar values and a plurality of points in an elliptic curve in an elliptic curve cryptosystem, said points being positioned on said elliptic curve, said multi-scalar multiplication computation apparatus (1101) comprising:
a scalar-value representation unit (1102) for representing said scalar values as sequences,
a precomputation unit (1103) for computing predetermined number of points on said elliptic curve from said points positioned on said elliptic curve, and
a multi-scalar multiplication computation executing unit (1104) for computing said multi-scalar multiplied point from said scalar values, said points positioned on said elliptic curve, and said computed points on said elliptic curve, wherein said multi-scalar multiplication computation apparatus (1101)
represents, by said scalar-value representation unit (1102), said scalar values as said sequences of 0, 1, and -1, and afterwards,
computes, by said precomputation unit (1103) and by a 1-time inversion, said predetermined number of points on said elliptic curve from said points positioned on said elliptic curve, and afterwards,
computes, by said multi-scalar multiplication computation executing unit (1104), said multi-scalar multiplied point from said scalar values, said points positioned on said elliptic curve, and said computed points on said elliptic curve.

10. A multi-scalar multiplication computation apparatus (1101) for computing a multi-scalar multiplied point from a plurality of scalar values and a plurality of points in an elliptic curve in an elliptic curve cryptosystem, said points being positioned on said elliptic curve, said multi-scalar multiplication computation apparatus (1101) comprising:
a scalar-value representation unit (1102) for representing said scalar values as sequences,
a precomputation unit (1103) for computing predetermined number of points on said elliptic curve from said points positioned on said elliptic curve, and
a multi-scalar multiplication computation executing unit (1104) for computing said multi-scalar multiplied point from said scalar values, said points positioned on said elliptic curve, and said computed points on said elliptic curve, wherein said multi-scalar multiplication computation apparatus (1101)
represents, by said scalar-value representation unit (1102), said scalar values as said sequences of 0 and 1, and afterwards,
computes, by said precomputation unit (1103) and by a 1-time inversion, said predetermined number of points on said elliptic curve from said points positioned on said elliptic curve, and afterwards,
computes, by said multi-scalar multiplication computation executing unit (1104), said multi-scalar multiplied point from said scalar values, said points positioned on said elliptic curve, and said computed points on said elliptic curve.

11. A multi-scalar multiplication computation apparatus (1101) for computing a multi-scalar multiplied point from a plurality of scalar values and a plurality of points in an elliptic curve in an elliptic curve cryptosystem, said points being positioned on said elliptic curve, said multi-scalar multiplication computation apparatus (1101) comprising:
a scalar-value representation unit (1102) for representing said scalar values as sequences,
a precomputation unit (1103) for computing predetermined number of points on said elliptic curve from said points positioned on said elliptic curve, and
a multi-scalar multiplication computation executing unit (1104) for computing said multi-scalar multiplied point from said scalar values, said points positioned on said elliptic curve, and said computed points on said elliptic curve, wherein said multi-scalar multiplication computation apparatus (1101)
represents, by said scalar-value representation unit (1102), said scalar values as said sequences of 0, 1, and -1, and afterwards,
computes, by said precomputation unit (1103), said predetermined number of points on said elliptic curve from said points positioned on said elliptic curve, and afterwards,
computes, by said multi-scalar multiplication computation executing unit (1104), said multi-scalar multiplied point from said scalar values, said points positioned on said elliptic curve, and said computed points on said elliptic curve.

12. A signature verification apparatus (101), comprising:
a signature verification processing unit (102) for executing verification of signature data, and
a multi-scalar multiplication computation unit (103) requested by said signature verification processing unit (102) to compute a multi-scalar multiplication, wherein said multi-scalar multiplication computation unit (103) computes a multi-scalar multiplied point on the basis of said multi-scalar multiplication computation method as claimed in Claim 1.

13. A storage medium where there is stored a program relative to said multi-scalar multiplication computation method as claimed in Claim 1.

14. A storage medium where there is stored a program relative to said signature data verification method as claimed in Claim 7.

15. A computer-implemented program for computing a multi-scalar multiplied point from a plurality of scalar values and a plurality of points in an elliptic curve in an elliptic curve signature verification method (ECDSA), said scalar values being derived from a value of a signature, said points being positioned on said elliptic curve, said computer-implemented program comprising the processes of:
(1201) representing said scalar values as sequences of 0, 1, and -1,
(1203) computing, by once inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

16. A computer-implemented program for computing a multi-scalar multiplied point from a plurality of scalar values and a plurality of points in an elliptic curve in an elliptic curve signature verification method (ECDSA), said scalar values being derived from a value of a signature, said points being positioned on said elliptic curve, said computer-implemented program comprising the processes of:
(1203) computing, by once inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

17. A computer-implemented program for computing a multi-scalar multiplied point from a plurality of scalar values and a plurality of points in an elliptic curve in an elliptic curve signature verification method (ECDSA), said scalar values being derived from a value of a signature, said points being positioned on said elliptic curve, said computer-implemented program comprising the processes of:
(1201) representing said scalar values as sequences of 0, 1, and -1,
(1203) computing predetermined number of points on said elliptic curve from said points positioned on said elliptic curve, and
(1204) computing said multi-scalar multiplied point from said scalar values, said points positioned on said elliptic curve, and said computed points on said elliptic curve.

18. A computer-implemented program for computing a multi-scalar multiplied point from a plurality of scalar values and a plurality of points in an elliptic curve in an elliptic curve cryptosystem, said points being positioned on said elliptic curve, said computer-implemented program comprising the processes of:
(1201) representing said scalar values as sequences of 0, 1, and -1,
(1203) computing, by once inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

19. A computer-implemented program for computing a multi-scalar multiplied point from a plurality of scalar values and a plurality of points in an elliptic curve in an elliptic curve cryptosystem, said points being positioned on said elliptic curve, said computer-implemented program comprising the processes of:
(1203) computing, by a 1-time inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

20. A computer-implemented program for computing a multi-scalar multiplied point from a plurality of scalar values and a plurality of points in an elliptic curve in an elliptic curve cryptosystem, said points being positioned on said elliptic curve, said computer-implemented program comprising the processes of:
(1201) representing said scalar values as sequences of 0, 1, and -1,
(1203) computing predetermined number of points on said elliptic curve from said points positioned on said elliptic curve, and
(1204) computing said multi-scalar multiplied point from said scalar values, said points positioned on said elliptic curve, and said computed points on said elliptic curve.

21. A digital signature verification method using an elliptic curve, comprising the steps of:_
(202) generating a plurality of scalar values from a numerical value of an inputted digital signature,
(203) computing a multi-scalar multiplied point from said plurality of scalar values and a plurality of points positioned on said elliptic curve, one point of said plurality of points positioned on said elliptic curve being set up as a base point of said signature verification, another point thereof positioned on said elliptic curve being given as a public key, and
(205) presenting a verification result by making a comparison between a value of said computed multi-scalar multiplied point and said numerical value of said digital signature, wherein said multi-scalar multiplied point computing step (203) comprises the steps of:
(1203) computing, by once inversion, predetermined number of points on said elliptic curve from said points positioned on said elliptic curve, and
(1204) computing said multi-scalar multiplied point from said scalar values, said points positioned on said elliptic curve, and said computed points on said elliptic curve.

22. The digital signature verification method as claimed in Claim 21, wherein said multi-scalar multiplied point computing step (203), before said inversion computing step (1203), comprises a step (1201) of representing said scalar values as sequences of 0, 1, and -1.

23. The digital signature verification method as claimed in Claim 21, wherein said inversion computing step (1203) comprises a precomputation where the number of times of inversions is reduced using Montgomery trick method.

24. A digital signature verification method using an elliptic curve, comprising the steps of:
(202) generating a plurality of scalar values from a numerical value of an inputted digital signature,
(203) computing a multi-scalar multiplied point from said plurality of scalar values and a plurality of points positioned on said elliptic curve, one point of said plurality of points positioned on said elliptic curve being set up as a base (point) of said signature verification, another point thereof positioned on said elliptic curve being given as a public key, and
(205) presenting a verification result by making a comparison between a value of said computed multi-scalar multiplied point and said numerical value of said digital signature, wherein said multi-scalar multiplied point computing step (203) comprises the steps of:
(1201) representing said scalar values as sequences of 0, 1, and -1
(1203) computing predetermined number of points on said elliptic curve from said points positioned on said elliptic curve, and
(1204) computing said multi-scalar multiplied point from said scalar values, said points positioned on said elliptic curve, and said computed points on said elliptic curve.
(: signature verification method corresponding to Claim 3, NAF + simultaneous method)
